# EUROPÄISCHE PATENTSCHRIFT

(11) **EP 0 852 051 B1**
(45) Veröffentlichungstag und Bekanntmachung des Hinweises auf die Patenterteilung: **02.01.2002**
(21) Anmeldenummer: 96932482.1
(22) Anmeldetag: 09.09.1996
(51) Int. Cl.: G10L 15/06, G10L 15/26

(54) **VERFAHREN ZUR AUTOMATISCHEN STEUERUNG EINES ODER MEHRERER GERÄTE DURCH SPRACHKOMMANDOS ODER PER SPRACHDIALOG IM ECHTZEITBETRIEB UND VORRICHTUNG ZUM AUSFÜHREN DES VERFAHRENS**
PROCESS FOR AUTOMATIC CONTROL OF ONE OR MORE DEVICES BY VOICE COMMANDS OR BY REAL-TIME VOICE DIALOG AND APPARATUS FOR CARRYING OUT THIS PROCESS
PROCEDE DE COMMANDE AUTOMATIQUE D'AU MOINS UN APPAREIL PAR DES COMMANDES VOCALES OU PAR DIALOGUE VOCAL EN TEMPS REEL ET DISPOSITIF POUR LA MISE EN OEUVRE DE CE PROCEDE

(30) Priorität: 11.09.1995 DE 19533541
(43) Veröffentlichungstag der Anmeldung: 08.07.1998
(73) Patentinhaber: DaimlerChrysler AG, 70567 Stuttgart (DE)
(72) Erfinder: STAMMLER, Walter, D-89077 Ulm (DE); CLASS, Fritz, D-72587 Römerstein (DE); MÖLLER, Carsten-Uwe, D-73730 Esslingen (DE); NÜSSLE, Gerhard, D-89134 Blaustein (DE); REH, Frank, D-70439 Stuttgart (DE); BUSCHKÜHL, Burkard, D-71069 Sindelfingen (DE); HEINRICH, Christian, D-73733 Esslingen (DE)
(74) Vertreter: Straub, Bernd
(86) Internationale Anmeldenummer: EP9603939
(87) Internationale Veröffentlichungsnummer: WO9710583

(56) Entgegenhaltungen:
- EP-A- 0 535 929
- DE-A- 4 031 638
- US-A- 4 751 737
- US-A- 4 856 072
- US-A- 5 241 619
- US-A- 5 353 376

## Beschreibung

Die Erfindung betrifft ein Verfahren zur automatischen Steuerung eines oder mehrerer Geräte durch Sprachkommandos oder per Sprachdialog im Echtzeitbetrieb gemäß Oberbegriff des Patentanspruchs 1 sowie eine Vorrichtung zum Ausführen des Verfahrens gemäß Oberbegriff des Patentanspruchs 46.

Verfahren bzw. Vorrichtungen dieser Art werden allgemein in sogenannten Sprachdialog- bzw. Sprachbediensystemen z.B. für Fahrzeuge, Computer Roboter, Maschinen, Anlagen usw. eingesetzt.

Ein Sprachdialogsystem (SDS) läßt sich i.a. auf folgende Komponenten reduzieren:
- Spracherkennungssystem, das ein eingesprochenes Kommando ("Sprachkommando") mit anderen erlaubten Sprachkommandos vergleicht und eine Entscheidung trifft, welches Kommando aller Wahrscheinlichkeit nach eingesprochen wurde,
- Sprachausgabe, die die zur Benutzerführung erforderlichen Sprachbefehle und Signalisierungstöne ausgibt und ggf. das Erkennergebnis rückmeldet,
- Dialog- und Ablaufsteuerung, um dem Benutzer zu verdeutlichen, welche Art von Eingabe erwartet wird, bzw. um zu prüfen, ob die erfolgte Eingabe konsistent ist mit der Aufforderung und mit dem momentanen Status der Applikation, und um die resultierende Aktion bei der Applikation (z.B. dem zu steuernden Gerät) anzustoßen,
- Kontrollinterface als Schnittstelle zur Applikation:
   Dahinter verbergen sich Hard- und Softwaremodule, um verschiedene Aktuatoren bzw. Rechner anzusteuern, die die Applikation beinhalten,
- Applikation, die per Sprache angesteuert wird:
   Das kann z.B. ein Bestell- oder Auskunftsystem, ein CAE-Arbeitsplatz oder ein behindertengerechter Rollstuhl sein.

Die vorliegende Beschreibung konzentriert sich - ohne Einschränkung auf die allgemeine Anwendbarkeit der geschilderten Verfahren, Vorrichtungen und Abläufe - auf die Spracherkennung, die Dialogstruktur sowie auf eine spezielle Applikation in Kraftfahrzeugen.

Die Schwierigkeiten bei bisher bekannten Lösungen liegen
a) in der Notwendigkeit, ein aufwendiges Training durchzuführen, um das System auf die Charakteristik des jeweiligen Sprechers oder auf einen wechselnden Wortschatz anzupassen. Die Systeme sind entweder vollständig sprecherunabhängig oder vollständig sprecherabhängig bzw. sprecheradaptiv, wobei letztere für jeden neuen Benutzer einen Trainingslauf erfordern. Dies kostet Zeit und reduziert den Bedienkomfort bei häufig wechselnden Sprechern sehr stark. Aus diesem Grund ist bei herkömmlichen Systemen auch der Vokabularumfang gering bei Applikationen, wo mit wechselnden Sprechern und Zeitnot der einzelnen Sprecher zu rechnen ist,
b) in dem unzureichenden Bedienkomfort, der darin zum Ausdruck kommt, daß
   - das Vokabular auf ein Minimum begrenzt ist, um hohe Erkennsicherheit zu garantieren,
   - die Einzelworte eines Kommandos isoliert (d.h. mit Zwischenpausen) eingegeben werden,
   - Einzelworte quittiert werden müssen, um Fehler zu erkennen,
   - mehrstufige Dialoghierarchien abzuarbeiten sind, um vielfältige Funktionen zu steuern,
   - ein Mikrofon in die Hand zu nehmen ist bzw. ein Headset (Kombination aus Kopfhörer und Lippenmikrofon) getragen werden muß,
c) in der fehlenden Robustheit
   - gegenüber Bedienfehlern
   - gegenüber störenden Umgebungsgeräuschen,
d) in der aufwendigen und teueren Hardware-Realisierung, vor allem bei mittleren und kleinen Stückzahlen.

Die Aufgabe der Erfindung besteht darin, zum einen ein Verfahren anzugeben, mit dem mit möglichst geringem Aufwand ein oder mehrere Geräte durch Sprachkommandos oder per Sprachdialog zuverlässig im Echtzeitbetrieb gesteuert bzw. bedient werden können. Ferner soll eine geeignete Vorrichtung angegeben werden, mit der das zu schaffende Verfahren ausgeführt werden kann.

Die erfindungsgemäße Lösung der Aufgabe ist in bezug auf das zu schaffende Verfahren durch die Merkmale des Patentanspruchs 1 und in bezug auf die zu schaffende Vorrichtung durch die Merkmale des Patentanspruchs 46 wiedergegeben. Die übrigen Ansprüche enthalten vorteilhafte Aus- und Weiterbildungen des erfindungsgemäßen Verfahrens (Ansprüche 2 bis 45) sowie der erfindungsgemäßen Vorrichtung (Ansprüche 47 bis 58).

Der wesentliche Vorteil der Erfindung ist darin zu sehen, daß mit relativ geringem Aufwand eine zuverlässige Steuerung bzw. Bedienung von Geräten per Sprachkommando bzw. per Sprachdialog im Echtzeitbetrieb möglich ist.

Ein weiterer wesentlicher Vorteil ist darin zu sehen, daß eine der natürlichen Sprechweise weitgehend angepaßte Eingabe der Sprachkommandos bzw. Führung des Sprachdialogs mit dem System möglich ist und daß dem Sprecher hierfür ein umfangreiches Vokabular von zulässigen Kommandos zur Verfügung steht.

Ein dritter Vorteil ist darin zu sehen, daß das System fehlertolerant arbeitet und in einer vorteilhaften Weiterbildung der Erfindung z.B. auch nichtzulässige Wörter, Namen, Laute oder Wortumstellungen in den vom Sprecher eingegebenen Sprachkommandos i.a. als solche erkennt und aus diesen eingegebenen Sprachkommandos von dem Sprecher an sich gewollte zulässige Sprachkommandos extrahiert.
Im folgenden wird die Erfindung anhand der Figuren näher erläutert. Es zeigen
- FIG. 1: das Blockschaltbild einer bevorzugten Ausführungsform der erfindungsgemäßen Vorrichtung zum Ausführen des erfindungsgemäßen Verfahrens ("Sprachdialogsystem"),
- FIG. 2: eine detaillierte Darstellung des eigentlichen Sprachdialogsystems gemäß FIG. 1,
- FIG. 3: das Flußdiagramm zu einer bevorzugten Ausführungsform der Segmentierung der eingegebenen Sprachkommandos für ein Sprachdialogsystem gemäß FIG. 2,
- FIG. 4 und 5: Ausführungsbeispiele von Hidden-Markov-Modellen,
- FIG. 6: den hardwaremäßigen Aufbau eines bevorzugten Ausführungsbeispiels des Sprachdialogsystems gemäß FIG. 2,
- FIG. 7: das Zustandsdiagramm für die Anwendung des Sprachdialogsystems gemäß FIG. 2 zur sprachgesteuerten Bedienung eines Telefons,
- FIG. 8: das Flußdiagramm zur Bedienung eines Telefons gemäß FIG. 7,
- FIG. 9 und 10: das Flußdiagramm zur Funktion "Namenswahl" (FIG. 9) bzw. "Nummernwahl" (FIG. 10) bei der Bedienung eines Telefons gemäß Flußdiagramm nach FIG. 8.

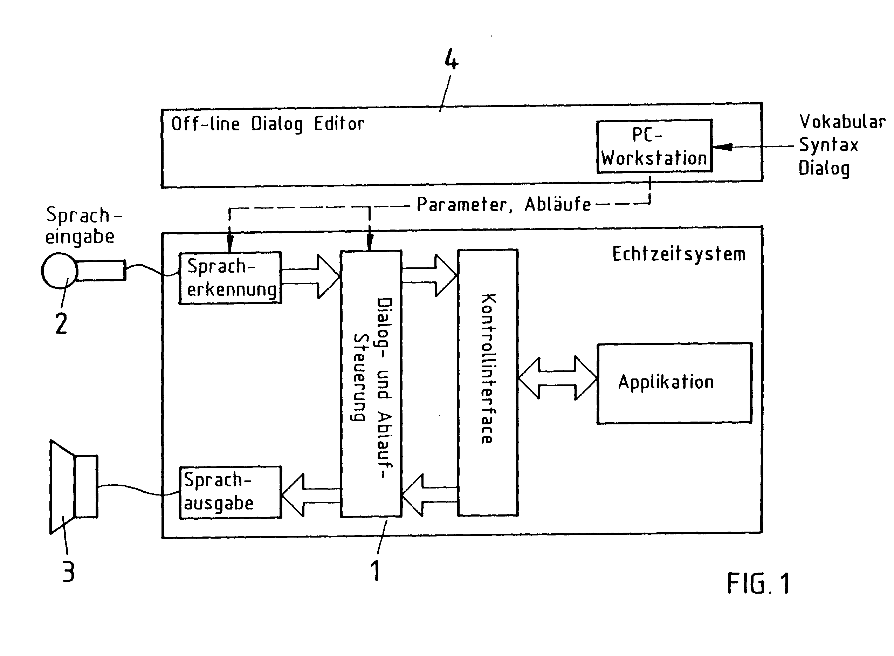

Das im folgenden beschriebene Sprachdialogsystem (SDS) 1 in FIG. 1 umfaßt die Komponenten Spracheingabe (symbolisch dargestellt durch ein Mikrofon 2), Spracherkennung, Dialog- und Ablaufsteuerung, Kommunikations- und Kontrollinterface, Sprachausgabe (mit angeschlossenem Lautsprecher 3) sowie (beispielhaft) eine Applikation, d.h. ein durch das SDS zu steuerndes bzw. zu bedienendes Gerät. SDS und Applikation bilden zusammen ein Sprachbediensystem (SBS), das in Echtzeit ("on-line") betrieben wird.

Die Syntax- und Dialogstruktur und die für alle Benutzer/ Sprecher verbindlichen Basissprachkommandos werden "off-line" außerhalb des SDS bzw. SBS (beispielhaft) mit Hilfe einer PC-Workstation im "off-line Dialog Editormodus" 4 erstellt und fixiert und zusammen mit vorzugebenden Parametern und Ablaufstrukturen dem SDS bzw. SBS vor Inbetriebname in Form von Datenfiles übergeben.

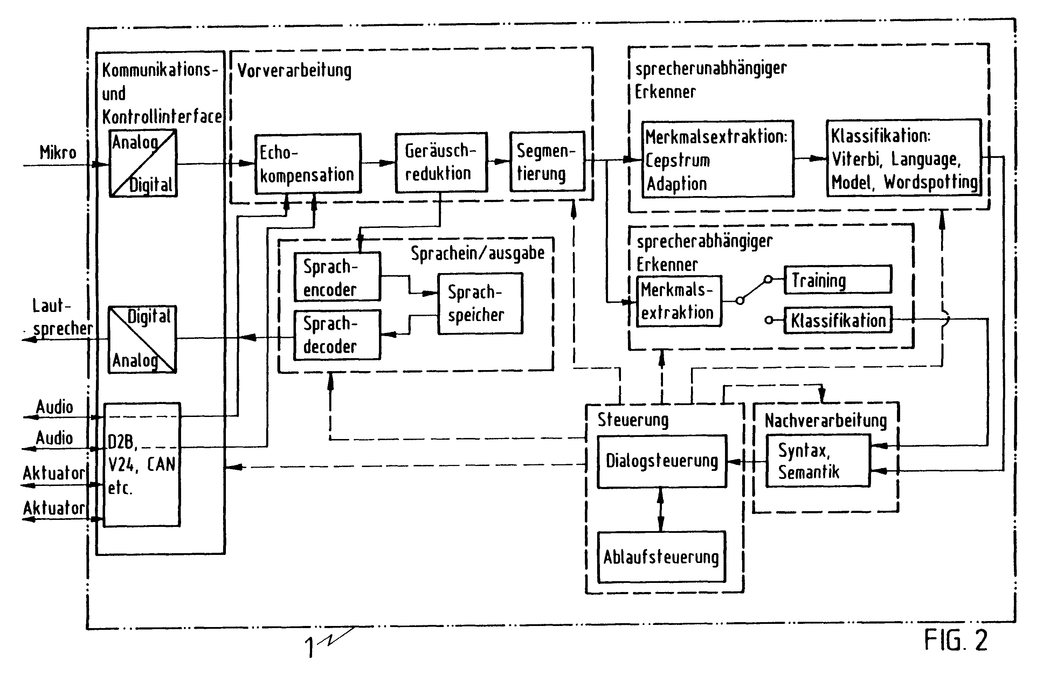

Das SDS 1 der FIG. 1 ist in FIG. 2 im Detail dargestellt. Ein (nicht gezeigtes) Mikrofon ist mit einem Analog/Digital-Wandler verbunden, der über Vorrichtungen zur Echokompensation, Geräuschreduktion und Segmentierung mit einem sprecherunabhängigen Verbundwort-Spracherkenner und mit einem sprecherabhängigen Spracherkenner verbunden ist. Die beiden Spracherkenner sind ausgangsseitig mit einer Nachverarbeitungseinheit zur syntaktisch-grammatikalischen und semantischen Verarbeitung der Erkenner-Ausgangssignale verbunden. Diese Einheit wiederum ist mit der Dialog- und Ablaufsteuerung verbunden, die ihrerseits die Steuerung des SDS und der durch das SDS zu steuernden Geräte bildet. Ferner ist eine Spracheingabe- und Sprachausgabeeinheit vorgesehen, die aus einem Sprachencoder, einem Sprachdecoder und einem Sprachspeicher besteht.

Der Sprachencoder ist eingangsseitig an die Vorrichtung zur Geräuschreduktion und ausgangsseitig an den Sprachspeicher angeschlossen. Der Sprachspeicher ist ausgangsseitig an den Sprachdecoder angeschlossen, der ausgangsseitig über einen Digital/Analog-Wandler mit einem (nicht gezeigten) Lautsprecher verbunden ist.

Die Vorrichtung zur Echokompensation ist über Schnittstellen mit (nicht gezeigten) Geräten/Sensoren verbunden, die ggf. zu kompensierende Audiosignale liefern (in der Figur mit "Audio" bezeichnet.

Der sprecherunabhängige Verbundwort-Spracherkenner weist zum einen eine Einheit zur Merkmalsextraktion auf, in der die Cepstrumsbildung und die Adaption des Erkenners u.a. an die analoge Übertragungscharakteristik der eingehenden Signale durchgeführt werden, und zum anderen eine nachgeschaltete Einheit zur Klassifikation.

Der sprecherabhängige Spracherkenner weist ebenfalls zum einen eine Einheit zur Merkmalsextraktion und zum anderen ein Einheit zur Klassifikation auf. Zusätzlich ist jedoch über einen Umschalter anstelle der Klassifikationseinheit eine Einheit zur Eingabe der sprecherspezifischen Zusatz-Sprachkommandos zuschaltbar, die in den Trainingsphasen vor, während oder nach dem Echtzeitbetrieb des SDS vom Erkenner trainiert werden sollen. Der sprecherabhängige Erkenner arbeitet z.B. nach dem Dynamic-Time-Warping(DTW)-Verfahren, nach dem dessen Klassifikationseinheit die Abstände zwischen dem zu erkennenden Kommando und vortrainierten Referenzmustern feststellt und das Referenzmuster mit dem geringsten Abstand als das zu erkennende Kommando identifiziert. Der sprecherabhängige Erkenner kann mit Methoden der Merkmalsextraktion arbeiten, wie sie in sprecherunabhängigen Spracherkennern zur Anwendung kommen (Cepstrumsbildung, Adaption usw.).

Ausgangsseitig sind die beiden Erkenner an die Nachverarbeitungseinheit zur syntaktisch-grammatikalischen und semantischen Verarbeitung der Erkenner-Ausgangssignale angeschlossen (die Aufgabe und Funktion dieser Einheit wird weiter unten erläutert). Ausgangsseitig ist der Nachverarbeitungseinheit die Dialogsteuerung nachgeschaltet, die mit der Ablaufsteuerung verbunden ist. Dialog- und Ablaufsteuerung bilden zusammen die SDS-Steuerungseinheit, die sowohl die Vorverarbeitung, die Sprachein- und -ausgabeeinheit, die beiden Erkenner, die Nachverarbeitung, das Kommunikations- und Kontrollinterface wie auch die zu steuernden bzw. bedienenden Geräte ansteuert (letztere über geeignete Schnittstellen - wie in der Figur 2 gezeigt).

Im folgenden wird die Funktionsweise des SDS näher erläutert.

Das SDS beinhaltet - wie zuvor ausgeführt - zweierlei Spracherkennertypen zur Erkennung vorgegebener Sprachkommandos. Die beiden Erkenner können wie folgt charakterisiert werden:
- Sprecherunabhängiger Erkenner: sprecherunabhängige Erkennung von verbunden gesprochenen Worten. Damit lassen sich allgemeine Steuerkommandos, Ziffern, Namen, Buchstaben etc. erkennen, ohne daß der Sprecher bzw. Benutzer eines oder mehrere der benutzten Worte vorher trainiert haben muß.
   Weiterhin kann die Eingabe im Verbundwortmodus erfolgen, d.h. eine Kombination mehrerer Worte, Ziffern, Namen ergibt ein Kommando, welches in einem Zug, d.h. ohne Pause eingesprochen wird (z.B. das Kommando: "Kreis mit Radius Eins"). Beim Algorithmus zur Klassifikation handelt es sich um einen HMM(Hidden-Markov-Modell)-Erkenner, der im wesentlichen auf Phonemen (Lautuntereinheiten) und/oder Ganzwortmodellen aufbaut und daraus Worte bzw. Kommandos zusammensetzt. Das Vokabular und die daraus aufgebauten Kommandos ("Syntaxstruktur") werden vorab im Labor fixiert und dem Erkenner in Form von Datenfiles übergeben ("off-line Dialog Editiermodus"). Im Echtzeit-Betrieb kann das Vokabular und die Syntaxstruktur des unabhängigen Erkenners vom Benutzer nicht modifiziert werden.
- Sprecherabhängiger Erkenner: sprecherabhängige Erkennung von benutzer-/sprecherspezifischen Namen oder Funktionen, die der Benutzer/Sprecher definiert und trainiert.
   Der Benutzer/Sprecher hat die Möglichkeit, ein persönliches Vokabular in Form von Namenslisten, Funktionslisten etc. anzulegen bzw. zu editieren. Dadurch kann der Benutzer/Sprecher seinen persönlichen Wortschatz wählen und diesen jederzeit "on line", d.h. im Echtzeitbetrieb, an seine Bedürfnisse anpassen.
   Als Beispiel für eine Anwendung im Telefonumfeld sei die "Namensliste" genannt, d.h. das individuell vom Benutzer/ Sprecher zusammengestellte Verzeichnis der Namen von Fernsprechteilnehmern, wobei
      - der jeweilige Name in einer Trainingsphase ein- oder mehrmals vom Benutzer eingesprochen wird ( z.B. "Onkel Willi") und dem Namen per Tastatureingabe, vorzugsweise aber per unabhängigem Spracherkenner eine Telefonnummer zugeordnet wird,
      - nach Abschluß des obigen Trainings und der Nummernzuweisung der Benutzer nur noch dem sprecherabhängigen Erkenner einen Namen ("Onkel Willi") nennt, nicht aber die zugehörige Telefonnummer, die dem System bereits bekannt ist.

Der sprecherabhängige Erkenner wird in der
- einfachsten Form als Einzelworterkenner ausgelegt
- in der leistungsfähigeren Form als Verbundworterkenner, der nahtlos mit dem sprecherunabhängigen Erkenner gekoppelt ist. (Z.B. "Onkel Willi anrufen" als vollständiges Kommando, wobei das Wort "anrufen" Teil des sprecherunabhängigen Vokabulars ist und "Onkel Willi" Teil des sprecherabhängigen Vokabulars ist).

Im Anschluß an die Spracherkennung wird in der Nachverarbeitungseinheit eine Nachverarbeitung der mit einer bestimmten Erkennwahrscheinlichkeit behafteten Ergebnisse der beiden Spracherkenner durchgeführt.

Der sprecherunabhängige Verbundwort-Spracherkenner z.B. liefert mehrere Satzhypothesen in einer Reihenfolge, welche die Erkennwahrscheinlichkeiten repräsentiert. Diese Satzhypothesen berücksichtigen in der Regel bereits die erlaubte Syntaxstruktur. Wo dies nicht der Fall ist, werden innerhalb der syntaktischen Nachverarbeitung (FIG. 2) unzulässige Wortfolgen ausgesondert bzw. nach verschiedenen Kriterien bewertet, wie wahrscheinlich die hierin auftretende Wortkombination ist. Ferner werden die von den Spracherkennern erzeugten Satzhypothesen auf ihre semantische Plausibilität überprüft und danach die Hypothese mit der höchsten Wahrscheinlichkeit ausgewählt.

Ein korrekt erkanntes Sprachkommando wird an die Dialogsteuerung weitergereicht und führt anschließend zu einem diesem Sprachkommando zugeordneten Eingriff auf die Applikation, wobei die Meldung über das Kontrollinterface weitergereicht wird. Ggf. wird das erkannte Sprachkommando von der Dialogsteuerung auch (oder nur) an die Sprachausgabe weitergereicht und dort ausgegeben.

Das hier skizzierte System ist im "on-line"-Betrieb durch eine fixierte Syntax- und Kommandostruktur sowie durch eine Kombination von fixiertem Vokabular (sprecherunabhängiger Erkenner) und frei definierbarem Vokabular, wie z.B. Namen (sprecherabhängiger Erkenner), gekennzeichnet.

Dieser zunächst starr erscheinende Rahmen ist eine Voraussetzung für hohe Erkennungsleistung bei großem Vokabularumfang (zum gegenwärtigen Zeitpunkt bis zu mehreren hundert Worten) z.B. bei geräuschbehafteter Umgebung, bei wechselnden akustischen Verhältnissen in der Fahrgastzelle sowie bei variierenden Sprechern. Der hohe Vokabularumfang wird genutzt, um die Benutzerfreundlichkeit durch Verwendung synonymer Worte bzw. unterschiedlicher Aussprachevarianten zu erhöhen. Auch erlaubt die Syntax die Umstellung von Worten in den Sprachkommandos, so z.B.:
"Größerer Radius bei linkem Kreis"
oder - alternativ hierzu -
"Bei linkem Kreis größerer Radius",
wobei diese Alternativen jedoch von vorneherein bei der Festlegung mit dem "off-line Dialog Editor" definiert sein müssen.

Der hier skizzierte Lösungsansatz erweist sich vor allem deshalb als vorteilhaft, weil
- die Verbundworteingabe von Kommandos natürlicher und schneller ist als die Isoliertworteingabe. Die Praxis hat gezeigt, daß der unbefangene Benutzer schwer daran zu gewöhnen ist, abgehackt (mit deutlichen Zwischenpausen) zu sprechen, um ein Mehrwortkommando einzugeben (die Akzeptanz derartiger Systeme ist deshalb deutlich geringer),
- die Eingabe z.B. von Ziffern- oder Buchstabenkolonnen im Verbund leichter ist und weniger Konzentration erfordert als die Einzeleingabe,
- die Dialogführung natürlicher ist, weil z.B. bei Ziffernkolonnen nicht jede Einzelziffer quittiert werden muß, sondern nur der eingegebene Ziffernblock,
- wegen des Wortschatzes von z.B. bis zu einigen hundert Worten eine Vielzahl von Funktionen per Sprache bedienbar sind, die vorher manuelle Bedienung erforderten,
- die Menge manueller Schaltelemente reduziert werden kann bzw. bei Spracheingabe die Hände anderweitig benutzbar sind, z.B. bei der Qualitätskontrolle von Motoren.

Der Bedienkomfort wird bei dem vorliegenden System weiterhin erhöht durch die vorteilhafte Nutzung von Freisprechmikrofon(en) anstelle (oder in Ergänzung) von Headset (Kopfhörer und Lippenmikrofon) bzw. Handmikrofon. Die Nutzung eines Freisprechmikrofons erfordert allerdings i.a. eine leistungsfähige Geräuschreduktion (FIG. 2) sowie ggf. eine Echokompensation von Signalen, die z.B. aus dem Dialog- oder anderen Lautsprechern stammen. Je nach Applikation bzw. Geräuschpegel können diese Maßnahmen jedoch auch bei der Nutzung von Headset oder Handmikrofon erforderlich sein.

Die Echokompensation erlaubt es dem Benutzer/Sprecher insbesondere, der Sprachausgabe ins Wort zu fallen, d.h. den Erkenner anzusprechen, während die Sprachausgabe aktiv ist.

Ferner können im Labor per "off-line Dialog Editor" jederzeit das Vokabular und die Kommandos verändert werden, ohne daß dies ein neues Training mit einer Vielzahl von Sprechern für die neuen Worte des sprecherunabhängigen Erkenners bedarf. Der Grund liegt darin, daß im Labor die Datenbank für sprecherunabhängige Phoneme und/oder sprecherunabhängige Ganzwortmodelle vorliegt und aus diesen Phonemen bzw. Ganzwortmodellen mit der vorhandenen Entwicklungsumgebung ohne weiteres neue Worte und Kommandos generiert werden können. Letztlich läuft eine Kommando- oder Vokabularänderung darauf hinaus, die im Labor mit dem Entwicklungssystem berechneten neuen Parameter und Daten als Datenfile in den sprecherunabhängigen "Echtzeit-Erkenner" zu überspielen und dort im Speicher abzulegen.

Mittels des SDS können sowohl Funktionen innerhalb des Computers, in dem das SDS eingebaut ist, als auch externe Geräte bedient werden. Das SDS weist z.B. neben einer PCMCIA-Schnittstelle noch Schnittstellen auf, welche für externe Geräte zugänglich sind. Dies sind zum Beispiel:
V.24-Schnittstelle, optischer Daten-Steuerbus, CAN-Interface usw. Optional kann das SDS mit weiteren Schnittstellen ausgestattet werden.

Das SDS wird vorzugsweise durch Betätigen einer push-to-talk-Taste (PTT-Taste) oder durch ein definiertes Schlüsselwort aktiviert. Die Abschaltung erfolgt durch Eingabe eines entsprechenden Sprachkommandos ("Abbruchkommando") an definierten Stellen des Dialogs oder jederzeit durch Betätigen der PTT-Taste oder einer Abbruchtaste oder automatisch durch die interne Ablaufsteuerung, wenn nach einer vom SDS vorgegebenen oder adaptiv auf den jeweiligen Benutzer eingestellten Zeit und/oder nach einer Rückfrage des SDS keine Spracheingabe erfolgt ist oder wenn der vom Benutzer ausgewählte Dialog planmäßig abgeschlossen worden ist (z.B. die gewünschte Telefonnummer an das Telefon zwecks Aufbau der Verbindung abgegeben worden ist). In geräuscharmer Umgebung kann das SDS auch kontinuierlich aktiviert sein.

### Ablaufbeschreibung

An dieser Stelle sei betont, daß das SDS in FIG. 2 nur ein Beispiel ist für ein nach der Erfindung mögliches Sprachdialogsystem. Die Konfiguration der Schnittstellen zur Dateneingabe bzw. Datenausgabe bzw. zur Steuerung der angeschlossenen Komponenten ist hier ebenfalls nur beispielhaft dargestellt.

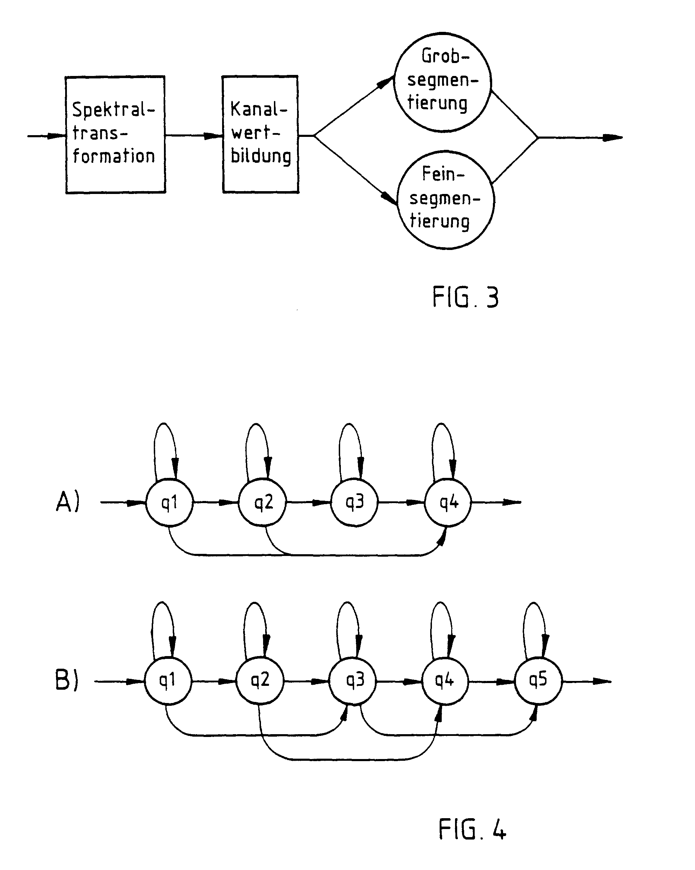

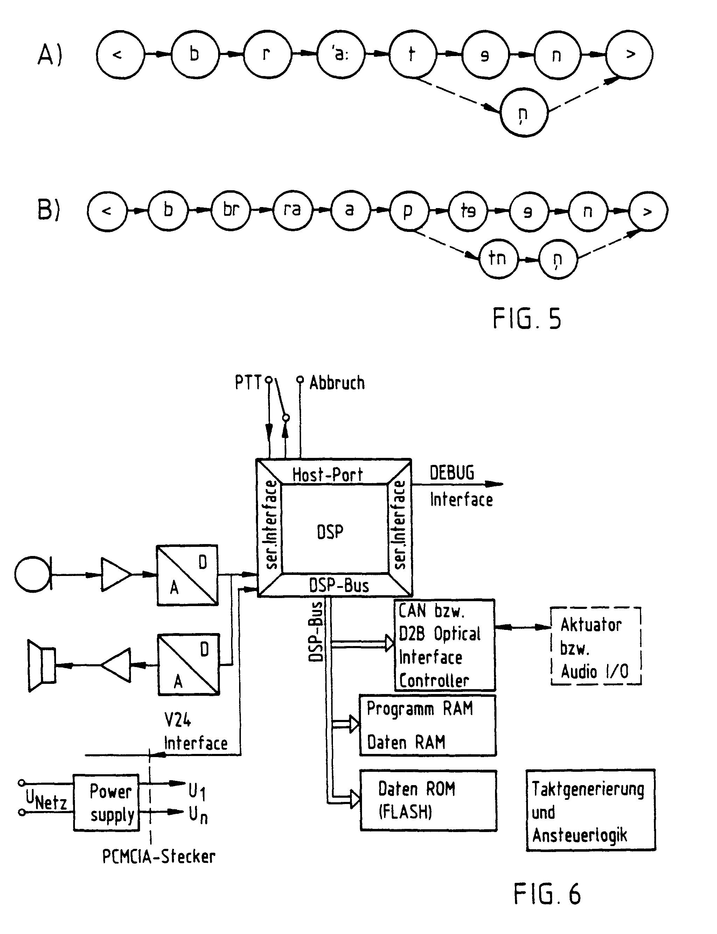

Die in der FIG. 2 dargestellten Funktionsblöcke werden im folgenden näher erläutert.
**1. Echokompensation:**
   Über die Echokompensation werden die digitalisierten Lautsprechersignale z.B. der Sprachausgabe bzw. eines eingeschalteten Radios über adaptive Filteralgorithmen vom Mikrofonsignal subtrahiert. Die Filteralgorithmen bilden den Echopfad vom Lautsprecher zum Mikrofon nach.
**2. Geräuschreduktion:**
   Diese ermöglicht es, stationäre oder quasi-stationäre Umgebungsgeräusche vom digitalisierten Sprachsignal zu unterscheiden und diese vom Sprachsignal abzuziehen. Geräusche dieser Art sind z.B.: Fahrgeräusche in einem Kraftfahrzeug (Kfz), Umgebungsgeräusche in Labors und Büros wie Lüfter oder Maschinengeräusche in Fabrikationshallen.
3. **Segmentierung:**
   Die Segmentierung setzt - wie in FIG. 3 gezeigt - auf spektraltransformierten Daten auf. Hierzu werden die Signale blockweise zu sogenannten "frames" zusammengefaßt und mit einer schnellen Fouriertransformation (FFT) in den Frequenzbereich umgesetzt. Durch Betragsbildung und Gewichtung mit einem gehörbezogenen MEL-Filter, d.h. einem dem melodischen Empfinden der Tonhöhe nachgebildeten Filter, bei dem eine gehörbezogene Einteilung des Sprachbereiches (~ 200 Hz bis ~ 6 kHz) in einzelne Frequenzbereiche ("Kanäle") durchgeführt wird, werden die Spektralwerte zu Kanalvektoren zusammengefaßt, die die Leistung in den verschiedenen Frequenzbändern angeben. Im Anschluß erfolgen eine Grobsegmentierung, die permanent aktiv ist und Kommandoanfang sowie Kommandoende grob erfaßt, sowie eine Feinsegmentierung, die im Anschluß daran die genauen Grenzen festlegt.
4. **Merkmalsextraktion**
   Der Merkmalsextraktor berechnet aus den digitalisierten und segmentierten Sprachsignalen über mehrere Stufen hinweg Merkmalsvektoren und bestimmt den dazugehörigen normierten Energiewert.
   Dazu werden beim sprecherunabhängigen Erkenner die Kanalvektoren mit einer diskreten Cosinustransformation (DCT) in Cepstralvektoren transformiert. Zusätzlich wird die Energie des Signals berechnet und normiert. Parallel dazu wird eine laufende Mittelwertberechnung der Cepstralwerte durchgeführt mit dem Ziel, den Erkenner sowohl an den momentanen Sprecher als auch auf Übertragungscharakteristiken, z.B. des Mikrofons und des Kanals (Sprecher → Mikrofon) zu adaptieren.
   Die Cepstralvektoren werden von diesem adaptierten Mittelwert befreit und mit der zuvor berechneten normierten Energie zu sogenannten CMF-Vektoren (Cepstralkoeffizienten mittelwertfrei) zusammengefaßt.
**5. Klassifikation des sprecherunabhängigen Verbundwort-Spracherkenners**
**5.1 Hidden-Markov-Modell (HMM)**
   Ein Hidden-Markov-Modell ist eine Ansammlung von Zuständen, die untereinander durch Übergänge verbunden sind (FIG. 4).
   Jeder Übergang, von einem Zustand qi zum anderen qj, wird durch eine sogenannte Übergangswahrscheinlichkeit beschrieben. Jedem Knoten (Zustand) ist ein Vektor von sogenannten Emissionswahrscheinlichkeiten der Länge M zugeordnet. Über diese Emissionswahrscheinlichkeiten wird die Verbindung zur physikalischen Welt hergestellt. Die Modellvorstellung geht soweit, daß in einem bestimmten Zustand qᵢ eines von M verschiedenen Symbolen "emittiert" wird, entsprechend der zustandsbezogenen Emissionswahrscheinlichkeit. Die Symbole stehen stellvertretend für die Merkmalsvektoren.
   Die Folge von "emittierten" Symbolen, die das Modell erzeugt, sind sichtbar. Die konkrete Abfolge der Zustände, die innerhalb des Modells durchlaufen werden, ist dagegen nicht sichtbar (engl. "hidden").
   Ein Hidden-Markov-Modell ist durch folgende Größen definiert :
      - T Anzahl der Symbole
      - t Zeitpunkt für ein beobachtetes Symbol, t = 1...T
      - N Anzahl der Zustände (Knoten) des Modells
      - M Anzahl der möglichen Symbole (= Codebuchgröße)
      - Q Zustände des Modells {q1, q2, ... qn}
      - V Menge der möglichen Symbole
      - A Übergangswahrscheinlichkeit vom einem Zustand in einen anderen
      - B Wahrscheinlichkeit für ein Ausgabesymbol in einem Zustand des Modells (Emissionswahrscheinlichkeit)
      - π Wahrscheinlichkeit für den Anfangszustand des Modells (beim Training des HMM's).
   Unter Benutzung der Wahrscheinlichkeitsverteilungen A und B können mit Hilfe dieses Modells Ausgabesymbole erzeugt werden.
**5.2 Aufbau des phonembasierten HMM-Erkenners**
   Bei einem Spracherkennungsystem mit größerem Wortschatz basiert die Worterkennung zweckmäßigerweise nicht auf Ganzwörtern, sondern auf phonetischen Wortuntereinheiten. Eine solche Wortuntereinheit ist zum Beispiel ein Laut, ein Diphon (Doppellaut) oder ein Lautübergang. Ein zu erkennendes Wort wird dann durch die Verkettung der entsprechenden Wortuntereinheiten-Modelle dargestellt. In FIG. 5 ist als Beispiel einer solchen Darstellung mit verketteten Hidden-Markov-Modellen (HMM) zum einen die standardphonetische Beschreibung des Wortes "braten" (FIG. 5a) sowie zum anderen die phonetische Beschreibung von Aussprachevarianten (FIG. 5b) dargestellt. Diese Wortuntereinheiten-Modelle werden bei der Erstellung des Systems an Stichproben vieler Sprecher trainiert und bilden die Datenbasis, auf der der "off-line Dialog Editor" aufsetzt. Dieses Konzept mit Wortuntereinheiten hat den Vorteil, daß neue Wörter relativ einfach in das vorhandene Lexikon aufgenommen werden können, da die Parameter für die Wortuntereinheiten schon bekannt sind.
   Theoretisch kann mit diesem Erkenner ein beliebig großes Vokabular erkannt werde. In der Praxis wird man jedoch durch beschränkte Rechenleistung und für die jeweilige Anwendung notwendige Erkennungsleistung an Grenzen stoßen.
   Die Klassifikation basiert auf dem sogenannten Viterbialgorithmus, in welchem die Wahrscheinlichkeit jedes Wortes für die einlaufende Symbolfolge berechnet wird, wobei ein Wort hier als Verkettung verschiedener Phoneme zu verstehen ist. Der Viterbiaigorithmus wird ergänzt durch eine Wortfolgestatistik ("Language Modell"), d.h. die im "off-line Dialog Editor" spezifizierten Mehrwortkommandos liefern die erlaubten Wortkombinationen. Im Extremfall beinhaltet die Klassifikation auch die Erkennung und Aussonderung von Füllauten (Äh, Hmm, Räusperer, Pausen) oder "Garbagewörtern" ("Nichtwörtern"). "Garbagewörter" sind sprachliche Ergänzungen, die den eigentlichen Sprachkommandos - unnötigerweise - vom Sprecher hinzugefügt werden, die aber in den Vokabularien des Spracherkenners nicht enthalten sind. Beispielsweise kann der Sprecher das Kommando "Kreis mit Radius eins" noch erweitern um Begriffe wie "Ich möchte jetzt einen ..." oder "Bitte einen ...". Je nach Applikation bzw. Umfang des benötigten Vokabulars können diese phonembasierten Hidden-Markov-Modelle bei Bedarf auch um ganzwortbasierte Hidden-Markov-Modelle ergänzt bzw. erweitert werden.
**6. Sprecherabhängiger Erkenner**
   Für die sprecherabhängige Erkennung wird auf derselben Vorverarbeitung aufgesetzt wie für den sprecherunabhängigen Erkenner. Aus der Literatur sind unterschiedliche Lösungsansätze bekannt (z.B. dynamische Zeitnormierung ("Dynamic Time Warping (DTW)"), Neuronale Netz-Klassifaktoren), die ein Training im Echtzeitbetrieb erlauben. Es handelt sich hierbei in erster Linie um Einzelworterkenner, wobei hier vorzugsweise das Verfahren der dynamischen Zeitnormierung zum Einsatz kommt.
   Um die Benutzerfreundlichkeit zu erhöhen, wird im hier beschriebenen SDS eine Kombination von sprecherunabhängigem (vgl. Punkt 5.) und sprecherabhängigem Erkenner im Verbundwortmodus verwendet ("Gloria anrufen", "Neues Ziel Onkel Willi", "Funktion Schrägellipse darstellen"), wobei die Worte "Gloria", "Onkel Willi", "Schrägellipse" vom Benutzer beim Training frei gewählt wurden und samt den zugehörigen Telefonnummern/Zieladressen/Funktionsbeschreibungen in entsprechenden Listen abgelegt wurden. Der Vorteil dieses Lösungsansatzes liegt darin, daß ein bis zwei (oder ggf. noch mehr) Dialogschritte eingespart werden.
**7. Nachverarbeitung: Syntax und Semantikprüfung:**
   Das SDS beinhaltet eine leistungsfähige Nachverarbeitung der von den Spracherkennern gelieferten Ergebnisse. Dazu gehören die syntaktischen Prüfungen dahingehend, ob die ermittelten Satzhypothesen dem a priori festgelegten Aufbau der Sprachkommandos ("Syntax") entsprechen. Falls nicht, werden die entsprechenden Hypothesen verworfen. Diese syntaktische Analyse kann im Einzelfall auch teilweise oder vollständig in den Erkenner selbst integriert werden, z.B. indem in den Entscheidungsbäumen des Klassifikators die Syntax bereits berücksichtigt wird.
   Weiterhin werden die vom Spracherkenner gelieferten Satzhypothesen auf ihren Sinn und auf ihre Plausibilität überprüft.
   Nach dieser Plausibilitätsprüfung wird die aktive Satzhypothese entweder an die Dialogsteuerung weitergereicht oder zurückgewiesen.
   Im Falle einer Rückweisung wird die nächstwahrscheinliche Hypothese des Spracherkenners genommen und auf gleiche Art und Weise behandelt.
   Im Falle eines syntaktisch korrekten und plausiblen Kommandos wird dieses zusammen mit der Beschreibung der Bedeutung an die Dialogsteuerung weitergegeben.
**8. Dialog- und Ablaufsteuerung**
   Die Dialogsteuerung reagiert auf den erkannten Satz und bestimmt die auszuführenden Funktionen. So z.B. legt sie fest
      - welche Rückfragen, Informationen oder Aufforderungen an den Benutzer ausgegeben werden,
      - welche Aktuatoren wie angesprochen werden,
      - welche Systemmodule aktiv sind (sprecherunabhängiger Erkenner, Training),
      - welche Teilwortschätze (Teilvokabularien) für die als nächstes erwartete Antwort aktiv sind (z.B. nur Ziffern).
   Des weiteren behält die Dialogsteuerung den Überblick über den Status der Applikation, soweit dieser dem SDS mitgeteilt wird. Der Dialogsteuerung unterlagert ist die Ablaufsteuerung, die die einzelnen Prozesse zeitlich und logisch kontrolliert.
**9. Kommunikations- und Kontrollinterface**
   Hier wird die Kommunikation mit den angeschlossenen Peripheriegeräten einschließlich der zu bedienenden Geräte abgewickelt.
   Dazu stehen verschiedene Schnittstellen zur Verfügung. Das SDS setzt i.a. allerdings nicht alle diese Schnittstellen voraus. Die in der FIG. 2 genannten sind nur beispielhafte Möglichkeiten einer Implementierung.
   Das Kommunikations- und Kontrollinterface wickelt u.a. auch die Sprachein- und -ausgaben z.B. über A/D- bzw. D/A-Wandler ab.
**10. Spracheingabe/-ausgabe**
   Die Sprachein/ausgabe setzt sich zusammen aus einem "Sprachsignal-Kompressionsmodul" (= "Sprachencoder"), der die Redundanz bzw. Irrelevanz aus dem digitalisierten Sprachsignal entzieht und somit ein Sprachsignal definierter Dauer in einem erheblich kleineren Speicher als direkt nach der A/D-Wandlung ablegen kann. Die komprimierte Information wird in einem Sprachspeicher abgelegt und für die Ausgabe im "Sprachdecoder" regeneriert, so daß das ursprüngliche eingegebene Wort wieder hörbar ist. Der hierbei ggf. auftretende Qualitätsverlust bei der Wiedergabe hält sich bei den heute verfügbaren Codier- bzw. Decodierverfahren in einem vertretbaren Rahmen.
   Für die Dialogführung sind im Sprachspeicher bereits von vorneherein ("off-line Dialog Editor") eine Reihe von Kommandos, Hilfstexten oder Anweisungen abgelegt, die den Benutzer bei der Bedienung unterstützen sollen, bzw. ihm Informationen von der Applikationsseite her zukommen lassen.
   Weiterhin wird die Sprachcodierung während des Trainings für den sprecherabhängigen Erkenner aktiviert, da der vom Benutzer eingesprochene Namen gleichfalls im Sprachspeicher abgespeichert wird. Der Benutzer kann durch Abhören seiner Namensliste bzw. Funktionsliste jederzeit akustisch über den Inhalt, d.h. die einzelnen Namen bzw. Funktionen, informiert werden.
   Bezüglich Sprachcodier- und -decodieralgorithmus können z.B. Verfahren angewandt werden, die aus der Sprachübertragung unter dem Schlagwort "Quellkodierung" bekannt sind und per Software auf einem programmierbaren Prozessor implementiert werden.

In FIG. 6 ist ein Beispiel für einen möglichen Hardwareaufbau der SDS gemäß FIG. 2 dargestellt. Die Konfiguration der einzelnen Funktionsblöcke sowie die Schnittstellen zur Datenein- und Datenausgabe bzw. zur Steuerung der angeschlossenen Komponenten ist hier nur beispielhaft dargestellt. Der hier angenommene aktive Wortschatz (Vokabular) für sprecherunabhängig gesprochene Worte kann z.B. einige hundert Worte umfassen.

Der digitale Signalprozessor (DSP) ist ein handelsüblicher programmierbarer Prozessor, der sich von einem Mikroprozessor durch andere Busarchitektur (z.B. Harvard-Architektur statt Von-Neumann-Architektur), spezielle "on-chip"-Hardware-Rechenwerke (Multiplizierer/Akkumulatoren/Shifter etc.) und I/O-Funktionalitäten auszeichnet, die bei echtzeitiger digitaler Signalverarbeitung benötigt werden. In zunehmendem Maße bieten leistungsfähige RISC-Prozessoren ähnliche Funktionalitäten wie DSPs und können diese ggf. ersetzen.

Der hier gezeigte DSP (bzw. ein anderer Mikroprozessor vergleichbarer Leistungsfähigkeit) kann mit Ausnahme spezieller Interface-Kontrollfunktionen sämtliche in FIG. 2 dargestellte Funktionen per Software bzw. integrierter Hardware abwickeln. Mit derzeit handelsüblichen DSPs lassen sich mit dem hier vorgestellten Konzept derzeit (beispielhaft) Wortschätze von mehreren hundert Worten realisieren, wobei davon ausgegangen wird, daß dieser Wortschatz vollständig zur Auswahl steht als "aktives Vokabular" und nicht durch Bildung von Teilvokabularien erheblich kleiner ist. Für den Fall, daß Teilvokabularien gebildet werden, kann jedes davon die genannte Größe umfassen.

Durch die Hardwarestruktur gemäß FIG. 6 und insbesondere durch den Verzicht auf zusätzliche Spezialbausteine für die Erkennung und/oder für Dialogabwicklung, Ablaufsteuerung, Sprachkodierung und Interface-Protokollabwicklung bietet sich die Chance einer Realisierung mit einer kompakten, kostengünstigen Hardware mit niedrigem Stromverbrauch. Durch die technologische Weiterentwicklung werden zukünftig höhere Rechenleistungen und höhere Speicherumfänge auf den DSPs verfügbar sein und größere externe Speicherbereiche adressierbar sein, so daß umfangreichere Vokabularien bzw. leistungsfähigere Algorithmen realisierbar sein werden.

Das SDS wird durch die an den DSP angeschlossene "push-to-talk"-Taste (PTT) aktiviert. Ein Betätigen dieser Taste veranlaßt die Steuersoftware, den Erkennvorgang zu starten. Im einzelnen sind neben dem DSP folgende weitere Hardware-Module vorhanden:
- **A/D- und D/A-Wandler:**
   Über einen angeschlossenen A/D- und D/A-Wandler werden
   - das Mikrofonsignal und ggf. die Lautsprechersignale digitalisiert und zur weiteren Verarbeitung an den DSP übertragen,
   - die digitalisierten Sprachdaten zur Sprachausgabe/ Dialogsteuerung in ein Analogsignal zurückgewandelt, verstärkt und an ein geeignetes Wiedergabemedium (z.B. Lautsprecher) weitergereicht.
- **D2B optical:**
   Dies ist ein optisches Bussystem, über welches diverse Audio- und Informationsgeräte gesteuert werden können (z.B.: Autoradio und CD-Wechsler, Autotelefon und Navigationsgeräte usw.). Dieser Bus überträgt nicht nur Steuer-, sondern auch Audiodaten; im Extremfall (d.h. wenn Mikrofon- und Lautsprechersignal hierüber geschickt werden) erübrigt sich A/D- und D/A-Wandlung im SDS.
- **CAN Bus:**
   Dies ist ein Bussystem, über welches Informationsgeräte und Aktuatoren im Kfz gesteuert werden können; Audioübertragung ist in der Regel nicht möglich.
- **V.24-Schnittstelle:**
   Diese Schnittstelle kann zur Steuerung diverser Peripheriegeräte dienen. Weiterhin kann über diese Schnittstelle die Software des SDS aktualisiert werden. So kann ein entsprechender Wortschatz oder eine entsprechende Sprache (z.B.: Deutsch, Englisch, Französisch...) geladen werden.
- **PCMCIA-Interface:**
   Diese Schnittstelle dient neben der Kommunikation mit einem Desktop- oder Portable Computer auch der Spannungsversorgung des SDS. Mehrere der oben angeführten Funktionen können hier zusammengefaßt werden. Weiterhin kann diese Schnittstelle neben den elektrischen Eigenschaften auch die mechanischen Abmessungen des SDS bestimmen. Diese können z.B. so ausgewählt werden, daß das SDS in einen PCMCIA-Schacht eines Desktop- oder Portable Computers gesteckt werden kann.
- **Speicher**
   Der an den DSP angeschlossene Speicher (Daten/Programm-RAM und ROM) dient dem DSP als Programm- und Datenspeicher. Ferner beinhaltet dieser die spezifischen Klassifikations-Modelle und ggf. die Referenzmuster für die beiden Spracherkenner und die Festtexte zur Dialogsteuerung und zur Benutzerführung. In einem FLASH-Speicher oder batteriegepufferten Speicher werden die benutzerspezifischen Informationen abgelegt (Adress-, Datenlisten).

Die hier skizzierte Hardware-Konfiguration insbesondere bezüglich der Schnittstellen hängt stark von der jeweiligen Applikation oder von speziellen Kundenanforderungen ab und ist hier exemplarisch für einige Anwendungsfälle beschrieben. In anderen Applikationen (z.B. bei Anbindung an einen PC oder eine Workstation oder beim Einsatz in portablen Telefonen) kann die Wahl der Schnittstellen völlig anders sein. Auch können A/D- und D/A-Wandler bereits auf dem DSP integriert sein.

### Funktionsbeschreibung am Beispiel eines sprachbedienten Autotelefons

Im folgenden sind nun die Dialogabläufe exemplarisch am Beispiel einer sprachgesteuerten Telefonsteuerung (z.B. in einem Kfz) beschrieben.

Dieses Beispiel läßt sich erweitern auf die Ansteuerung von Telefon und Radio und/oder CD und/oder Navigation im Kfz bzw. auf die Bedienung eines CAE-Arbeitsplatzes o.ä.

Charakteristisch ist für jedes dieser Beispiele:
- Die sprecherunabhängige Erkennung von Mehrwortkommandos, sowie Buchstaben- oder Ziffernkolonnen,
- Die sprecherabhängige Eingabe eines vom Benutzer vorher trainierten, freigewählten Namens oder Funktionswortes, dem zugeordnet ist eine Funktion, ein Zahlencode (z.B. Telefonnummer eines Telefonbuches oder Senderfrequenz einer Radiosenderliste) oder eine Buchstabenkombination (z.B. Zielort bei Navigationssystemen).
   Bei der Definition der Zuordnung gibt der Benutzer die Funktion, Buchstaben- oder Ziffernkombination im sprecherunabhängigen Verbundwortmode ein (wobei die Funktion, die Buchstaben, Ziffern Teil des zulässigen Vokabulars sein müssen, d.h. mit "off-line Dialog Editor" vorab festgelegt sein müssen).
- Mit dieser Namenswahl verbunden ist stets die Verwaltung einer entsprechenden Liste unterschiedlicher Namen bzw. Funktionsworte desselben Benutzers (Telefonbuch, Senderliste, Zielortliste). Diese Liste kann erweitert, gelöscht, abgefragt oder korrigiert werden.

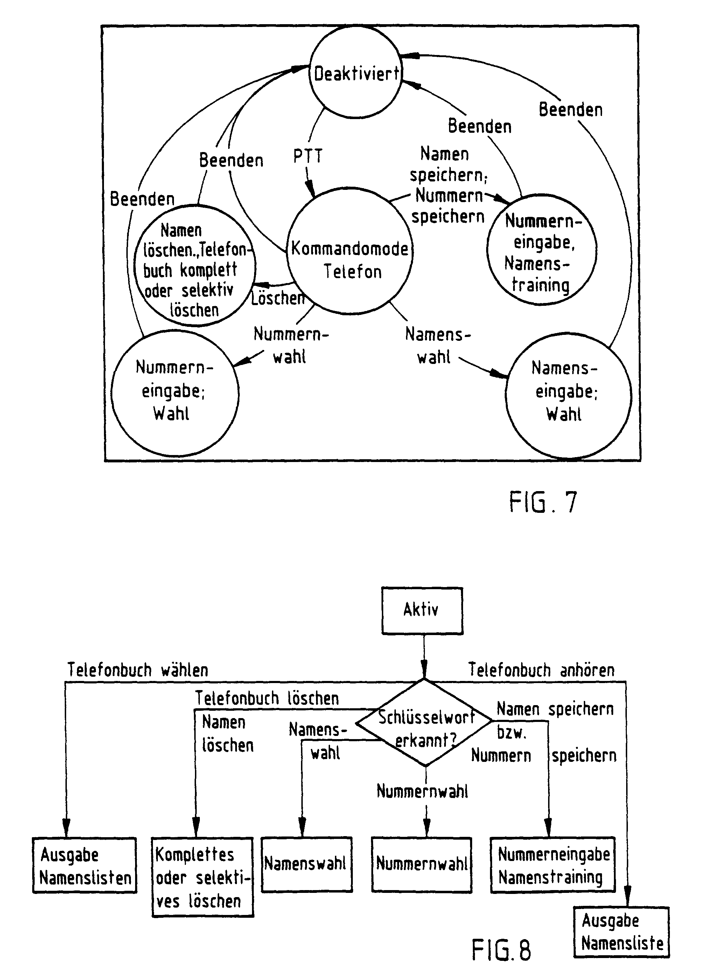

### Zustandsdiagramm SDS (FIG. 7):

Während der Bedienung des Telefons über die Spracheingabe nimmt das SDS unterschiedliche Zustände ein, von denen einige beispielhaft in FIG. 7 gezeigt sind (deaktivierter Zustand; Kommandomodus "Telefon"; Nummerneingabe bzw. -wahl sowie Namenseingabe bzw. -wahl im Zusammenhang mit der Wahlfunktion; Nummerneingabe bzw. Namenstraining im Zusammenhang mit der Speicherfunktion; Namen löschen bzw. Telefonbuch komplett oder selektiv löschen in Zusammenhang mit der Löschfunktion). Die Übergänge werden durch Äußerung von Sprachkommandos ("Nummernwahl", "Namenswahl", "Namen speichern", "Nummern speichern", "Beenden", "Löschen") gesteuert, wobei die Aktivierung des SDS durch Betätigen der PTT-Taste erfolgt. Ein Gesprächsabbruch erfolgt z.B. durch Eingabe eines speziellen Abbruchkommandos ("Beenden") oder durch Betätigen einer Abbruchtaste.

### Betriebszustand "Deaktiviert":

Das Sprachdialogsystem ist in diesem Zustand nicht erkennbereit. Teile der Signalverarbeitungssoftware sind zweckmäßigerweise dennoch immer aktiv (Geräuschreduktion, Echokompensation), um den Geräusch- und Echozustand permanent zu aktualisieren

### Betriebszustand "Aktiv" (FIG. 8):

Das Sprachdialogsystem ist durch die PTT-Taste aktiviert worden und wartet nun auf die zur weiteren Steuerung der Peripheriegeräte (Telefon) erlaubten Kommandos. Die Funktionsabläufe des Betriebszustandes "Aktiv" sind in FIG. 8 in Form eines Flußdiagramms (beispielhaft) dargestellt, und zwar für die Funktionen "Telefonbuch wählen", "Telefonbuch löschen", "Namen löschen", "Namenswahl", "Nummernwahl", "Namen speichern", "Nummern speichern", "Telefonbuch anhören" und die zugehörigen Aktionen und Reaktionen (Ausgabe der Namenslisten, komplette oder selektive Löschung, Namens- oder Nummernwahl, Nummerneingabe bzw. Namenstraining). Selbstverständlich können diese Funktionen bei Bedarf durch zusätzliche weitere Funktionen ergänzt bzw. erweitert bzw. durch andere Funktionen ganz oder teilweise ersetzt werden.
Generell ist in diesem Zusammenhang anzumerken, daß das aktivierte SDS jederzeit, d.h. auch während eines der nachfolgend näher erläuterten Funktionsabläufe, wieder deaktiviert werden kann mit der Folge, daß der ggf. noch nicht vollendete Funktionsablauf ab- oder unterbrochen wird.
Die Deaktivierung des SDS geschieht z.B. jederzeit durch Betätigen der ggf. vorhandenen Abbruchtaste oder durch Eingabe eines speziellen Abbruchkommandos (z.B. "Beenden", "Abbrechen" o.ä.) an definierten Stellen des Dialogs.

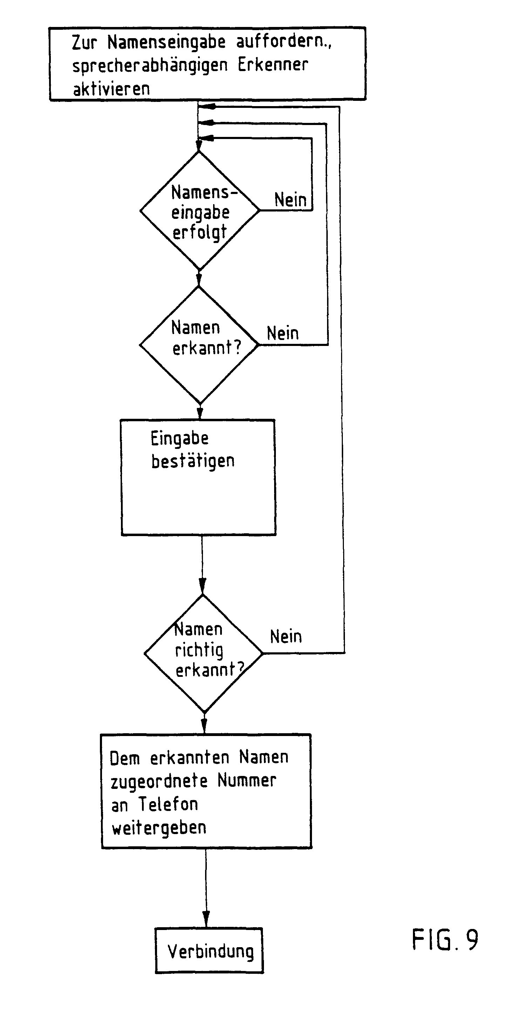

### Betriebszustand "Namenswahl" (FIG. 9):

Dieser Zustand setzt voraus, daß das entsprechende Sprachkommando "Namenswahl" bzw. "Telefon Namenswahl" o.ä. richtig erkannt wurde. In diesem Zustand ist die Wahl einer Telefonnummer durch eine Eingabe eines Namens möglich. Dazu wird auf einen sprecherabhängigen Spracherkenner umgeschaltet.
Das Sprachdialogsystem fordert zur Eingabe eines Namens auf. Dieser wird dem Benutzer bestätigt. Das Sprachdialogsystem schaltet nun wieder auf den sprecherunabhängigen Erkenner um. Sollte der Namen richtig erkannt worden sein, wird die dem Namen zugeordnete Telefonnummer an das Telefon weitergegeben und dort die Verbindung zu dem entsprechenden Fernsprechteilnehmer hergestellt.
Sollte der Namen falsch verstanden worden sein, so kann durch eine Abbruchfunktion (z.B. durch Betätigen der Abbruchtaste) ein Wählen der Telefonnummer verhindert werden. Alternativ hierzu ist auch eine Rückfrage des SDS denkbar, ob die dem Sprachkommando zugeordnete Aktion/Funktion ausgeführt werden soll oder nicht.
Der Umfang des Telefonbuches kann je nach Aufwand bzw. Speicherplatz z.B. 50 oder mehr gespeicherte Namen umfassen. Die Funktionsabläufe des Betriebszustandes "Namenswahl" sind in FIG. 9 in Form eines Flußdiagramms dargestellt.

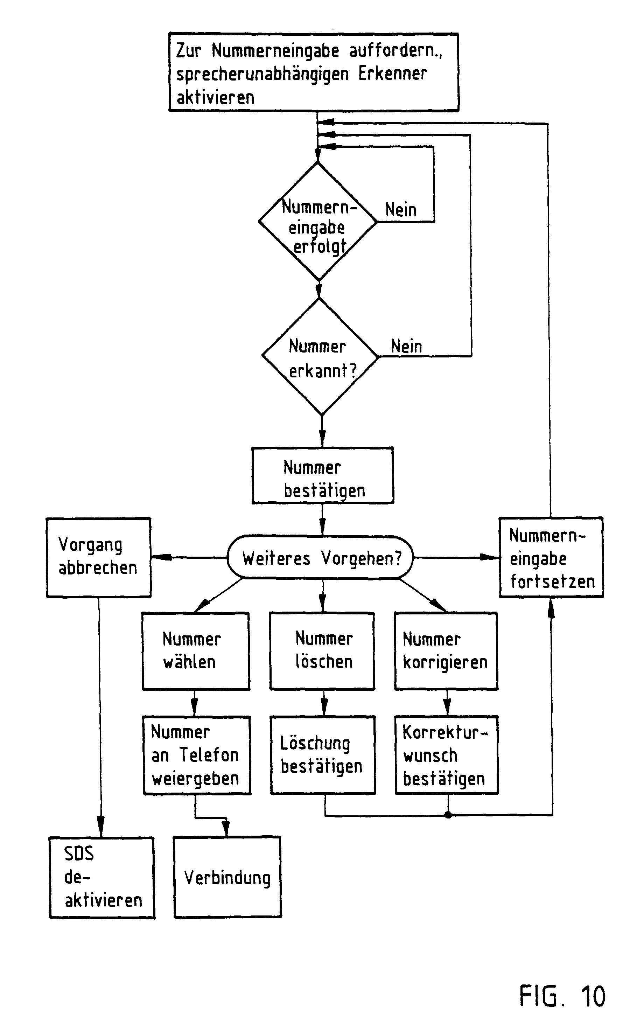

### Betriebszustand "Nummernwahl" (FIG. 10):

Dieser Zustand setzt voraus, daß das entsprechende Sprachkommando (z.B. "Nummernwahl" o.ä.) richtig erkannt wurde. In diesem Zustand erfolgt die Wahl einer Telefonnummer durch eine Eingabe einer Zahlenfolge. Die Eingabe erfolgt verbunden (ggf. blockweise) und sprecherunabhängig.
Das SDS fordert in diesem Betriebszustand zur Eingabe einer Nummer auf. Der Benutzer gibt daraufhin die Nummer komplett oder in einzelnen Blöcken als Sprachkommandos ein. Die eingegebenen Nummern bzw. der jeweils eingegebene Nummernblock wird dem Benutzer nach Eingabe des jeweiligen Sprachkommandos bestätigt. Nach der Aufforderung "wählen" wird die Nummer an das Telefon weitergegeben und dort die Verbindung zu dem entsprechenden Fernsprechteilnehmer hergestellt.
Sollte die Nummer falsch verstanden worden sein, so kann durch eine Fehlerfunktion die Nummer korrigiert oder gelöscht werden oder über eine Abbruchfunktion, z.B. durch das Kommando "Beenden" die Sprachbedienung abgebrochen werden, d.h. das SDS deaktiviert werden.
Die Funktionsabläufe des Betriebszustandes "Nummernwahl" sind in FIG. 10 in Form eines Flußdiagramms dargestellt.

### Betriebszustand "Verbindung":

Die Telefonverbindung zu dem gewünschten Fernsprechteilnehmer ist aufgebaut. In diesem Zustand ist die Spracherkennungseinheit deaktiviert. Das Telefongespräch wird z.B. durch die Abbruchtaste beendet.

### Betriebszustand "Nummer speichern / Namen speichern"

Nachdem auf das Sprachkommando "Nummer speichern" bzw. "Namen speichern" hin das SDS den Benutzer/Sprecher aufgefordert hat, die Ziffern einzugeben und der Benutzer diese eingesprochen hat (vgl. Betriebszustand "Nummernwahl") wird anstelle des Kommandos "wählen" das Kommando "speichern" bzw. ein vergleichbares Kommando eingegeben. Die Telefon-nummer wird nunmehr gespeichert. Das SDS fordert anschließend den Benutzer auf, den zugehörigen Namen einzusprechen und läßt die Namenseingabe zur Verbesserung des Trainingsergebnisses ein- oder mehrfach wiederholen. Nach dieser Wiederholung ist der Dialog beendet. Zu ergänzen ist, daß die anfängliche Zifferneingabe durch Dialog-Kommandos wie "abbrechen" bzw. "Abbruch", "wiederholen", "korrigieren" bzw. "Korrektur", "Fehler" usw. kontrolliert werden kann.

### Betriebszustand "Telefonbuch löschen / Namen löschen"

In Zusammenhang mit dem "Telefonbuch" (Liste aller trainierten Namen und zugehörigen Telefonnummern) sind eine Reihe von Editierfunktionen definiert, die den Komfort des Systems für den Benutzer erhöhen, wie z.B.:

### Telefonbuch löschen:

Komplettes oder selektives Löschen, wobei durch Rückfrage ("Sind sie sicher?") des SDS vor dem endgültigen Löschen und durch ggf. Ausgabe des spezifischen Namens ein versehentlichen Löschen durch Erkennungsfehler vermieden wird.

### Namen löschen:

Das SDS fordert den Benutzer auf, den zu löschenden Namen zu sprechen. Der Name wird vom SDS wiederholt.
Danach wird der Benutzer mit der Frage "Sind sie sicher?" aufgefordert, den Löschvorgang zu bestätigen:
Die Eingabe des Sprachkommandos "Ja" veranlaßt das Löschen des Namens aus dem Telefonbuch.
Jedes andere als Sprachkommando eingegebene Wort beendet den Dialog.

### Betriebszustand "Telefonbuch anhören":

Das SDS sagt den Inhalt des gesamten Telefonbuchs an. Ein Bestätigen der PTT-Taste oder die Eingabe eines Abbruchkommandos bricht die Ansage bzw. den Dialog ab.

### Betriebszustand "Telefonbuch wählen":

Das SDS sagt den Inhalt des gesamten Telefonbuchs an. Wird nach Ansage des gewünschten Namens ein Abbruch- oder Wähl- kommando gegeben bzw. die PTT-Taste betätigt, so wird der ausgewählte Namen noch einmal angesagt und nachgefragt "Soll die Nummer gewählt werden?"
Die Eingabe des Sprachkommandos "Ja" veranlaßt den Wahlvorgang, d.h. die Verbindung wird hergestellt.
"Nein" veranlaßt das SDS, das Ansagen des Telefonbuches fortzugesetzen. Das Sprachkommando "Abbruch", "Abbrechen" o.ä. oder Betätigen der Abbruchtaste beendet die Ansage bzw. den Dialog.
Die beiden zuletzt genannten Funktionen "Telefonbuch anhören" und "Telefonbuch wählen" lassen sich auch zu einer einzigen Funktion zusammenfassen. Dies erfolgt z.B. dadurch, daß bei "Telefonbuch anhören" nach dem relevanten Namen die PTT-Taste betätigt wird und das SDS z.B. nach der Mitteilung "Der Name 'Onke Willi' wird gewählt" den Wahlvorgang einleitet.

Die Eigenschaften des zuvor beschriebenen SDS können - unter Einbeziehung weiterer Applikationen - wie folgt zusammengefaßt werden:

Benutzt wird ein Verfahren zur automatischen Steuerung und/ oder Bedienung von einem oder mehreren Geräten per Sprachkommandos bzw. per Sprachdialog im Echtzeitbetrieb, bei dem Verfahren zur Sprachausgabe, Sprachsignalvorverarbeitung und Spracherkennung, syntaktisch-grammatikalischen Nachverarbeitung sowie Dialog-, Ablauf- und Schnittstellensteuerung zur Anwendung kommen. Das Verfahren in seiner Grundversion ist im "on-line"-Betrieb durch eine fixierte Syntax- und Kommandostruktur, sowie durch eine Kombination von fixiertem Vokabular (sprecherunabhängiger Erkenner) und frei definierbarem Vokabular, wie z.B. Namen oder Funktionsworte (sprecherabhängiger Erkenner), gekennzeichnet. In vorteilhaften Aus- und Weiterbildungen kann es durch eine Reihe von Merkmalen charakterisiert werden, wonach vorgesehen ist, daß:
- Syntax- und Kommandostruktur während des Echtzeit-Dialogbetriebs fixiert sind,
- Vorverarbeitung, Erkennung und Dialogsteuerung für Betrieb in geräuschbehafteter Umgebung ausgelegt sind,
- für die Erkennung allgemeiner Kommandos, Namen oder Daten kein Training durch den Benutzer erforderlich ist ("Sprecherunabhängigkeit"),
- für die Erkennung spezifischer Namen, Daten oder Kommandos einzelner Benutzer ein Training notwendig ist ("Sprecherabhängigkeit" bei benutzerspezifischen Namen bzw. Funktionsworten),
- die Eingabe von Kommandos, Namen oder Daten vorzugsweise verbunden erfolgt, wobei die Anzahl der Worte, aus denen ein Kommando für die Spracheingabe gebildet wird, variabel ist, d.h. daß nicht nur Ein- oder Zweiwortkommandos, sondern auch Drei-, Vier- oder Mehrwortkommados definiert werden können,
- eine echtzeitige Verarbeitung und Abwicklung des Sprachdialoges gegeben ist,
- die Sprachein- und -ausgabe nicht oder nicht nur über Handapparat, Kopfhörer, Headset o.ä., sondern vorzugsweise im Freisprechbetrieb erfolgt,
- die bei Freisprechen im Mikrofon registrierten Lautsprecherechos elektrisch kompensiert werden, um gleichzeitigen Betrieb von Spracheingabe und Lautsprecher (z.B. für Sprachausgabe, Ready-Signale etc.) zu ermöglichen ("Echokompensation"),
- eine laufende automatische Anpassung an die analoge Übertragungscharakteristik (Raumakustik, Mikrofon- und Verstärkercharakteristik, Sprechercharakteristik) im Betrieb erfolgt,
- im "off-line Dialog Editor" die Syntaxstruktur, die Dialogstruktur, das Vokabular und Aussprachevarianten für den Erkenner neu konfiguriert und festgelegt werden können, ohne daß dies zusätzlicher oder neuer Sprachaufnahmen für den unabhängigen Erkenner bedarf,
- im "off-line Dialog Editor" der Sprachumfang für die Sprachausgabe festgelegt wird, wobei
   a) die registrierten Sprachsignale einer digitalen Sprachdatenkompression unterworfen werden ("Sprachcodierung"), anschließend abgespeichert werden und im echtzeitigen Sprachausgabebetrieb nach Auslesen aus dem Speicher eine entsprechende Sprachdecodierung erfolgt, oder
   b) der Sprachumfang zuvor in Form von Text abgespeichert wurde und im echtzeitigen Sprachausgabebetrieb einer "Text-zu-Sprache"-Synthese ("Text-to-speech"-synthesis) unterworfen wird,
- die Wortstellung durch Vertauschen einzelner Worte eines Kommandos veränderbar ist,
- vorgegebene synonyme Worte nutzbar sind,
- die gleiche Funktion durch Kommandos unterschiedlicher Wortanzahl (z.B. durch Zweiwort- oder Dreiwortkommandos) realisiert werden kann,
- zur Erkennung und anschließender Aussonderung von Einfügungen wie "Äh", "Hm", "Bitte", oder anderer nicht zum Vokabular gehöriger Kommandos dem Nutzvokabular weitere Wörter bzw. Lauteinheiten hinzugefügt werden ("Nichtwörter", "Garbagewörter") bzw. Wordspottingansätze genutzt werden,
- die Dialogstruktur durch folgende Eigenschaften sich auszeichnet:
   - flache Hierarchie, d.h. einige wenige Hierarchieebenen, vorzugsweise eine oder zwei Auswahlebenen,
   - Einbindung von "Ellipsen", d.h. Verzicht auf Wiederholung ganzer Kommandosätze mit mehreren Kommandoworten; statt dessen Beschränkung auf kurze Kommandos, z.B. "weiter", "höher", "stärker", wobei dem System aus dem jeweils vorigen Kommando bekannt ist, worauf sich diese Aussage bezieht,
   - Einbeziehung von "Hilfe-" oder "Info-Menüs",
   - Einbeziehung von Rückfragen von seiten des SDS bei unsicheren Entscheidungen des Erkenners ("Wie bitte", "bitte wiederholen", "und weiter"),
   - Einbeziehung von Sprachausgaben, um durch Anregung bestimmter Sprechweisen die Erkennungssicherheit zu steigern (z.B. durch die Aufforderung: "bitte lauter"),
- die Spracherkennung durch einmalige Betätigung einer "Push-to-talk"-Taste ("PTT-Taste") aktiviert und dies akustisch quittiert wird (z.B. durch einen "Pieps"-Ton), um anzuzeigen, daß die Eingabe nunmehr erfolgen kann,
- auf die Betätigung der PTT-Taste verzichtet werden kann, wenn nach Rückfragen von Seiten der Sprachausgabe im Anschluß daran Spracheingaben erforderlich sind, wobei die PTT-Taste
   - entweder Mehrfachfunktionen wahrnimmt oder beinhaltet, z.B. während des Telefonierens ("Auflegen des Hörers", "Abheben des Hörers") bzw. beim Neustart des Sprachdialogsystems bzw. beim Abbruch eines Telefonwahlvorgangs,
   - oder ergänzt wird durch zusätzliche Schalter, welche z.B. einen Neustart oder den Abbruch einer Funktion/Aktion erlauben ("Abbruchtaste"); die PTT- und die Abbruchfunktion lassen sich ggf. auch in einen gemeinsamen Hebel integrieren (z.B.: Auslösen der PTT-Funktion durch Heranziehen des Hebels, Auslösen der Abbruchfunktion durch Wegdrücken des Hebels),
- das Dialogsystem eines oder mehrere der folgenden Leistungsmerkmale aufweist:
   - die spezifischen (z.B. trainierten) Kommandos, Daten, Namen oder Parameter unterschiedlicher Benutzer werden bei Bedarf für spätere Wiederbenutzung festgehalten,
   - vom Sprecher trainierte Kommandos bzw. Namen werden während der Trainingsphase nicht nur der Erkennung zugeführt, sondern auch in ihrem zeitlichen Verlauf aufgenommen, einer Datenkompression ("Sprachkodierung") zugeführt und nichtflüchtig gespeichert, um dem Benutzer durch Vorlesen den aktuellen Stand wiedergeben zu können,
   - die vom Sprecher trainierten Kommandos bzw. Namen werden während der Trainingsphase derart verarbeitet, daß Umgebungsgeräusche während der Aufnahme weitgehend kompensiert werden,
- der Abschluß eines Erkennungsvorganges bei Bedarf optisch bzw. akustisch quittiert wird ("Pieps"-Ton o.ä.) oder alternativ hierzu (und ggf. nur) bei sicherheits- bzw. zeit- oder kostenrelevanten Entscheidungen das Erkennungsergebnis akustisch wiederholt wird (Sprachausgabe) und der Benutzer die Möglichkeit hat, durch ein Sprachkommando oder durch Betätigen eines Schalters (z.B. der Abbruchtaste) die Ausführung der entsprechenden Aktion zu unterbinden,
- das Sprachdialogsystem mit einem optischen Anzeigemedium (LCD Display, Monitor o.ä.) gekoppelt ist, wobei das optische Anzeigenmedium einzelne oder mehrere oder alle der folgenden Funktionen übernehmen kann:
   - Ausgabe der erkannten Befehle zu Kontrollzwecken,
   - Darstellung der vom Zielgerät als Reaktion auf das Sprachkommando eingestellten Funktionen,
   - Darstellung verschiedener Funktionen/Alternativen, die per Sprachkommando anschließend eingestellt bzw. ausgewählt oder modifiziert werden,
- jeder Benutzer eigene Namens- oder Abkürzungslisten einrichten kann (vergleichbar einem Telefon- oder Adreßbuch), wobei
   - dem vom Benutzer beim sprecherabhängigen Erkenner trainierte Namen eine Ziffernkette, Buchstabenkette oder ein Kommando bzw. eine Kommandosequenz zugeordnet ist, die im sprecherunabhängigen Betriebsmodus eingegeben wurde,
   - anstelle der erneuten Eingabe der Ziffernkette, Buchstabenkette oder Kommandosequenz der Benutzer die Listenbezeichnung und den von ihm gewählten Namen eingibt, oder neben dem Namen ein geeignetes Kommando eingegeben wird, welches auf die richtige Liste schließen läßt,
   - die Liste sprachgesteuert jederzeit um weitere Einträge erweitert werden kann,
   - die Liste sprachgesteuert komplett oder selektiv gelöscht werden kann,
   - die Liste auf einen Sprachbefehl hin abgehört werden kann, wobei die vom Benutzer eingegebenen Namen und bei Bedarf die zugehörigen Ziffernkette, Buchstabenkette bzw. Kommandos akustisch ausgegeben werden können,
   - die akustische Ausgabe der Liste zu jedem beliebigen Zeitpunkt abgebrochen werden kann,
- eine Folge von Ziffern (Ziffernkolonne) entweder an einem Stück (zusammenhängend) oder blockweise eingesprochen werden kann, wobei das SDS vorzugsweise eines oder mehrere oder alle der folgenden Merkmale aufweist:
   - nach jeder Eingabepause erfolgt eine Quittierung, indem der letzte Eingabeblock von der Sprachausgabe wiederholt wird,
   - nach der Quittierung durch ein Kommando "Fehler", "falsch" o.ä. wird der letzte Eingabeblock gelöscht und die verbleibenden, gespeicherten Blöcke akustisch ausgegeben,
   - nach der Quittierung durch ein Kommando "Löschen" oder eine ähnliche Kommandoeingabe werden alle eingegebenen Ziffernblöcke gelöscht,
   - nach der Quittierung durch ein Kommando "wiederholen" o.ä. werden die bisher gespeicherten Blöcke akustisch ausgegeben,
   - nach der Quittierung durch ein Kommando "Abbruch" oder eine ähnliche Kommandoeingabe wird die Eingabe der Ziffernkolonne vollständig abgebrochen,
   - nach der Quittierung können weitere Ziffern bzw. Ziffernblöcke eingegeben werden,
   - nach der Quittierung wird die Zifferneingabe durch ein geeignetes Kommando abgeschlossen,
   - bei der auf das Kommando "Fehler" o.ä. bzw. auf das Kommando "wiederholen" folgenden Ausgabe der bisher eingesprochenen Ziffern wird dieselbe Blockung benutzt wie bei der Eingabe,
- eine Folge von Buchstaben (Buchstabenkolonne) eingesprochen wird, welche zur Auswahl komplexer Funktionen bzw. zur Eingabe einer Vielzahl von Informationen vorgesehen ist, wobei die Buchstabenkolonne zusammenhängend oder blockweise eingegeben wird und das SDS vorzugsweise eines oder mehrere oder alle der folgenden Merkmale aufweist:
   - nach jeder Eingabepause erfolgt eine Quittierung, indem der letzte Eingabeblock von der Sprachausgabe wiederholt wird,
   - nach der Quittierung durch ein Kommando "Fehler", "falsch" o.ä. wird der letzte Eingabeblock gelöscht und die verbleibenden, gespeicherten Blöcke akustisch ausgegeben,
   - nach der Quittierung durch ein Kommando "Löschen" o.ä. werden alle eingegebenen Buchstaben gelöscht und im Anschluß daran erfolgt eine erneute Eingabe,
   - nach der Quittierung durch ein Kommando "wiederholen" o.ä. werden die bisher gespeicherten Blöcke akustisch ausgegeben,
   - nach der Quittierung werden weitere Buchstaben bzw. Buchstabenblöcke eingegeben,
   - gegebenenfalls erfolgt ein Abgleich der Buchstabenkolonne mit einer gespeicherten Wortliste und es wird (werden) daraus das (die) bestpassende(n) Wort (Wörter) extrahiert; alternativ hierzu kann dieser Abgleich bereits nach Eingabe der einzelnen Buchstabenblocks erfolgen,
   - nach der Quittierung durch ein Kommando "Abbruch" oder eine ähnliche Kommandoeingabe wird die Eingabe der Buchstabenkolonne vollständig abgebrochen,
   - nach der Quittierung wird die Buchstabeneingabe durch ein geeignetes Kommando abgeschlossen,
- die Ausgabelautstärke der Sprachausgabe und des "Pieps"-Tons den Umgebungsgeräuschen angepaßt sind, wobei die Umgebungsgeräusche während der Sprachpausen bezüglich ihrer Stärke und Charakteristik erfaßt werden,
- der Zugang zum Sprachdialogsystem bzw. der Zugriff auf benutzerspezifische Daten/Kommandos nur nach Eingabe spezieller Schlüssel- oder Paßworte möglich ist bzw. nach Eingabe spezieller Schlüssel- oder Paßworte durch einen autorisierten Sprecher erfolgt, dessen Sprachcharakteristika dem Dialogsystem bekannt sind und von diesem geprüft werden,
- länger andauernde Sprachausgaben (z.B. Info-Menüs) durch gesprochene Abbruchkommandos oder durch die PTT- oder die Abbruchtaste vorzeitig beendet werden können,
- das Sprachdialogsystem in einer der folgenden Formen die manuelle Bedienung obiger Funktionen (z.B. per Schalter, Taste, Drehknopf) ergänzt oder ersetzt:
   - die Sprachkommandierung ersetzt keinerlei manuelle Bedienung, sondern existiert neben der manuellen Bedienung (d.h. die Bedienung kann jederzeit manuell erfolgen bzw. weitergeführt werden),
   - einige spezielle Leistungsmerkmale sind nur per Spracheingabe aktivierbar, die wesentlichen Geräte- und Bedienfunktionen bleiben sowohl manuell wie per Sprache kommandierbar,
   - die Anzahl der manuellen Bedienelemente wird deutlich reduziert, einzelne Tasten bzw. Drehknöpfe übernehmen Mehrfachfunktionen; per Sprache wird manuellen Bedienelementen eine spezielle Funktion zugewiesen; nur wesentliche Bedienfunktionen sind noch manuell ansteuerbar; die Basis der Bedienfunktionen ist jedoch die Sprachkommandierung,
- mit einem einzigen Mehrwortkommando eine Vielzahl unterschiedliche Geräte sowie Gerätefunktionen ansprech- und modifizierbar sind und somit eine umständliche mehrstufige Vorgehensweise (z.B. Auswahl des Gerätes im 1. Schritt, danach Auswahl der Funktion im 2. Schritt, danach Auswahl der Art der Änderung im 3.Schritt) nicht erforderlich ist,
- das Sprachdialogsystem im Kfz für einzelne oder mehrere der im folgenden genannten Funktionen zur Anwendung kommt:
   - Bedienung einzelner oder mehrerer Geräte, wie z.B. Autotelefon, Autoradio (ggf. mit Kassette, CD-Wechsler, Soundsystem), Navigationssystem, Notruf, Telematikdienste, Bordmonitor, Klimaanlage, Heizung, Reiserechner, Beleuchtung, Schiebedach, Fensterheber, Sitzversteller, Sitzheizung, Heckscheibenheizung, Spiegelverstellung und -memory, Sitzverstellung und -memory, Lenkradverstellung und -memory etc.,
   - Informationsabfrage von Parametern, wie z.B. Öldruck, -temperatur, Kühlwassertemperatur, Verbrauch, Reifendruck etc.,
   - Information über notwendige Maßnahmen in besonderen Situationen, wie z.B. bei zu hoher Kühlwassertemperatur, zu geringem Reifendruck etc.,
   - Warnung des Fahrers bei Defekten des Fahrzeugs,
      wobei
   - die sprachgesteuerte Auswahl eines neuen Senders im Autoradio vorzugsweise nach einem der folgenden Abläufe erfolgt:
      - Kommandierung des Suchlaufs auf- bzw. abwärts,
      - Spracheingabe der Senderfrequenz vorzugsweise in der umgangssprachlichen Form (z.B. "Einhundertdreikommasieben" bzw. "Hundertdreikommasieben", "Hundertunddreikommasieben" bzw. einschließlich der Frequenzangabe (z.B. "Hundertdreikommasieben MegaHertz")),
      - Spracheingabe des gebräuchlichen Sendernamens (z.B. "SDR1"),
   - bei der Klimaanlage die gewünschte Temperatur (ggf. nach dem Ort in der Fahrgastzelle des Kfz gestaffelt nach links, rechts, vorne, hinten) per Spracheingabe nicht nur relativ, sondern vorzugsweise absolut (d.h. in Grad, Fahrenheit o.ä.) festgelegt werden kann und zusätzlich minimale bzw. maximale bzw. mittlere Temperatur oder die Normaltemperatur kommandiert werden können; ähnlich können die Betriebsbedingungen für das Gebläse im Fahrgastraum festgelegt werden,
   - dem Navigationssystem ein Zielort (Ortsname, Straßenname) durch Eingabe von Buchstabenkolonnen im "Buchstabiermode" mitgeteilt wird, wobei auch der Anfang des Namens als Eingabe genügt und das Navigationssystem gegebenfalls mehrere Kandidaten zur Auswahl anbietet,
- eine oder mehrere der folgenden benutzerspezifischen Namenslisten eingerichtet werden:
   - Liste zur Speicherung von Telefonnummern unter vorgebbaren Namen/Abkürzungen,
   - Liste zur Speicherung von Zielen für das Navigationssystem unter vorgebbaren Namen/Abkürzungen,
   - Liste zur Speicherung von Funktionsnamen für Kommandos oder Kommandofolgen,
   - Liste zur Speicherung von Senderfrequenzen des Autoradios unter vorgebbaren Sendernamen bzw. Abkürzungen,
   - die Ausgabelautstärke der Sprachausgabe und des "Pieps"-Tons, ggf. auch die Radiolautstärke, unter Berücksichtigung eines oder mehrerer der folgenden Parameter festgelegt bzw. adaptiv angepaßt werden:
      - Fahrzeuggeschwindigkeit,
      - Drehzahl,
      - Öffnungsbreite der Fenster und des Schiebedaches,
      - Gebläseeinstellung,
      - Fahrzeugtyp,
      - Wichtigkeit der Sprachausgabe in der jeweiligen Dialogsituation.

In einer bevorzugten Ausführungsform des geschilderten Sprachdialogsystems ist u.a. vorgesehen, daß die Ablauf-, Dialog-, Schnittstellensteuerung, die Sprachein-/-ausgabe sowie die Sprachsignalvorverarbeitung, Erkennung, syntaktisch-grammatikalische und semantische Nachverarbeitung mittels Mikro- und Signalprozessoren, Speichern und Schnittstellenbausteinen erfolgt, vorzugsweise aber mit einem einzigen digitalen Signal- oder Mikroprozessor sowie dem erforderlichen externen Daten- und Programmspeicher, den Interfaces sowie den zugehörigen Treiberbausteinen, dem Taktgenerator, der Steuerlogik und den für Sprachein-/-ausgabe erforderlichen Mikrofonen und Lautsprechern samt zugehörigen Wandlern und Verstärkern sowie gegebenenfalls einer Push-to-talk(PTT)-Taste und einer Abbruchtaste.

Ferner ist es möglich, daß über ein oder mehrere Interfaces
- Daten und/oder Parameter ladbar bzw. nachladbar sind, um z.B. Verfahrensänderungen oder ein Sprachdialogsystem für eine andere Sprache zu realisieren,
- die auf einem separaten Rechner festgelegte oder modifizierte Syntaxstruktur, Dialogstruktur, Ablaufsteuerung, Sprachausgabe etc. auf das Sprachdialogsystem übertragen werden ("off-linie Dialog Editor"),
- Status- oder Diagnoseinformationen vom SDS angefordert und abgeholt werden können,
- das Sprachdialogsystem mit mehreren der anzusteuernden Geräte über ein Bussystem und/oder ein ringförmiges Netzwerk verknüpft ist (anstelle von Punkt zu Punkt-Verbindungen zu den einzelnen Geräten) und daß über diesen Bus bzw. das Netzwerk Steuerdaten bzw. Audiosignale bzw. Statusmeldungen des Kfz bzw. der zu bedienenden Geräte übertragen werden,
- die einzelnen anzusteuernden Geräte nicht jeweils ein eigenes Sprachdialogsystem enthalten, sondern von einem einzigen (gemeinsamen) Sprachdialogsystem bedient werden,
- eine oder mehrere Schnittstellen zu Fahrzeugkomponenten oder Fahrzeugrechnern bestehen, worüber permanente oder aktuelle Fahrzeugdaten dem Sprachdialogsystem mitgeteilt werden, wie z.B. Geschwindigkeit, Motortemperatur usw.
- das Sprachdialogsystem während der Wartezeit (in der keine Sprachein- oder -ausgabe erfolgt) andere Funktionen z.B. des Radios, des Telefons o.ä, übernimmt,
- durch erweiterten Speicher ein multilinguales sprecherunabhängiges Dialogsystem aufgebaut wird, wobei kurzfristig zwischen den Dialogsystemen verschiedener Sprachen umgeschaltet werden kann,
- ein optisches Display mit dem Sprachdialogsystem über ein spezielles Interface bzw. über den Busanschluß gekoppelt ist, wobei dieser Bus vorzugsweise ein optischer Datenbus ist und hierüber sowohl Steuer- wie Audiosignale übertragen werden.

Es versteht sich, daß die Erfindung nicht auf die dargestellten Ausführungs- und Anwendungsbeispiele beschränkt ist, sondern vielmehr sinngemäß auf weitere übertragbar ist. So ist es z.B. denkbar, ein solches Sprachdialogsystem zur Bedienung eines elektrischen Wörterbuches oder eines elektronischen Diktier- bzw. Übersetzungssystems zu verwenden.

Eine besondere Ausgestaltung der Erfindung besteht darin, daß
- für relativ begrenzte Anwendungen mit kleiner Syntax die syntaktische Überprüfung in Form eines syntaktischen Bigram-Sprachmodells in den Erkennungsprozeß einbezogen wird und somit die syntaktische Nachverarbeitung entfallen kann,
- bei komplexen Aufgabenstellungen die Schnittstelle zwischen Erkenner und Nachverarbeitung nicht mehr einzelne Sätze, sondern ein sog. "Worthypothesennetz" ist, aus dem in einer Nachverarbeitungsstufe aufgrund syntaktischer Vorgaben mit speziellen Paarungs-Strategien der bestpassende Satz extrahiert wird.

Ferner ist es möglich, ergänzend oder alternativ zur Sprachausgabe eine auf optischer Basis arbeitende Ausgabeeinheit (z.B. Display) vorzusehen, auf der z.B. die eingegebenen Sprachkommandos in der vom SDS erkannten Form zur Anzeige gebracht werden.

Schließlich ist es denkbar, daß das aktivierte SDS auch dadurch wieder deaktiviert werden kann, indem über eine längere, vom System entweder fest vorgegebene oder adaptiv auf den Benutzer/Sprecher eingestellte Zeitdauer vom Benutzer/ Sprecher kein neues Sprachkommando mehr eingegeben wird.

### Abkürzungen

- PTT: Push-to-Talk
- HMM: Hidden Markov Modelle
- DTW: Dynamic Time Warping (dynamische Zeitnormierung)
- CMF: Mittelwert befreite Cepstralvektoren
- DCT: Digitale Cosinus Transformation
- FFT: Fast Fourier Transformation
- LDA: Lineare Diskriminanzanalyse
- PCM: Pulse Code Modulation
- VQ: Vektorquantisierung
- SDS: Sprachdialogsystem
- SBS: Sprachbediensystem

## Patentansprüche

1. Verfahren zur automatischen Steuerung eines oder mehrerer Geräte durch Sprachkommandos oder per Sprachdialog im Echtzeitbetrieb,
**gekennzeichnet durch** folgende Merkmale:
- die eingegebenen Sprachkommandos werden mittels eines sprecherunabhängigen Verbundwort-Spracherkenners und eines sprecherabhängigen Zusatz-Spracherkenners erkannt und gemäß ihrer Erkennungswahrscheinlichkeit klassifiziert,
- erkannte zulässige Sprachkommandos werden auf ihre Plausibilität überprüft und dasjenige zulässige und plausible Sprachkommando mit der größten Erkennungswahrscheinlichkeit als das eingegebene Sprachkommando identifiziert und die diesem Sprachkommando zugeordneten Funktionen des oder der Geräte bzw. Antworten des Sprachdialogsystems initiiert bzw. generiert.

2. Verfahren nach Anspruch 1, **gekennzeichnet durch** folgende Merkmale:
• die Sprachkommandos (der Sprachdialog) werden (wird) auf der Basis von mindestens einer Syntaxstruktur, mindestens einem Basiskommandovokabular und bei Bedarf mindestens einem sprecherspezifischen Zusatzkommandovokabular gebildet (geführt);
• die Syntaxstruktur(en) und das (die) Basiskommandovokabular(ien) werden in sprecherunabhängiger Form vorgegeben und sind während des Echtzeitbetriebs fixiert;
• das (die) sprecherspezifische(n) Zusatzkommandovokabular (ien) wird (werden) vom (jeweiligen) Sprecher eingegeben und/oder geändert, indem in Trainingsphasen in- und/oder außerhalb des Echtzeitbetriebs ein nach einem sprecherabhängigen Erkennungsverfahren arbeitender Zusatz-Spracherkenner vom (jeweiligen) Sprecher **durch** ein- oder mehrmalige Eingabe der Zusatzkommandos auf die sprachspezifischen Merkmale des (jeweiligen) Sprechers trainiert wird;
• im Echtzeitbetrieb erfolgt die Abwicklung des Sprachdialogs und/oder die Steuerung des Geräts (der Geräte) wie folgt:
- vom (jeweiligen) Sprecher eingegebene Sprachkommandos werden einem sprecherunabhängigen und auf der Basis von Phonemen und/oder Ganzwortmodellen arbeitenden Verbundwortspracherkenner und dem sprecherabhängigen Zusatz-Spracherkenner zugeleitet und dort (jeweils) einer Merkmalsextraktion unterzogen und
- im Verbundwortspracherkenner anhand der dort extrahierten Merkmale auf das Vorliegen von Basiskommandos aus dem (jeweiligen) Basiskommandovokabular gemäß der (jeweils) vorgegebenen Syntaxstruktur untersucht und klassifiziert und
- im sprecherabhängigen Zusatz-Spracherkenner anhand der dort extrahierten Merkmale auf das Vorliegen von Zusatzkommandos aus dem (jeweiligen) Zusatzkommandovokabular untersucht und klassifiziert;
- anschließend werden die als mit einer bestimmten Wahrscheinlichkeit erkannt klassifizierten Kommandos und Syntaxstrukturen der beiden Spracherkenner zu hypothetischen Sprachkommandos zusammengefügt und diese gemäß der vorgegebenen Syntaxstruktur auf ihre Zulässigkeit und Erkennungswahrscheinlichkeit untersucht und klassifiziert;
- anschließend werden die zulässigen hypothetischen Sprachkommandos nach vorgegebenen Kriterien auf ihre Plausibilität untersucht und von den als plausibel erkannten hypothetischen Sprachkommandos dasjenige mit der höchsten Erkennungswahrscheinlichkeit ausgewählt und als das vom (jeweiligen) Sprecher eingegebene Sprachkommando identifiziert;
- anschließend wird (werden) die dem identifizierten Sprachkommando zugeordnete(n)
- Funktion(en) des (jeweils) zu steuernden Geräts initiiert und/oder
- Antwort(en) gemäß einer vorgegebenen Sprachdialogstruktur zur Fortführung des Sprachdialogs generiert.

3. Verfahren nach einem der Ansprüche 1 oder 2, **dadurch gekennzeichnet, daß** die Eingabe von Sprachkommandos akustisch, vorzugsweise im Freisprechbetrieb, erfolgt.

4. Verfahren nach einem der vorhergehenden Ansprüche, **dadurch gekennzeichnet, daß** akustisch eingegebene Sprachkommandos geräuschreduziert den beiden Spracherkennern zugeleitet werden, indem durch stationäre bzw. quasistationäre Umgebungsgeräusche verursachte Geräuschsignale im Sprachsignal-Empfangskanal vor den beiden Spracherkennern vorzugsweise mittels adaptiver digitaler Filterverfahren kompensiert werden.

5. Verfahren nach einem der vorhergehenden Ansprüche, **dadurch gekennzeichnet, daß** akustisch eingegebene Sprachkommandos echokompensiert den beiden Spracherkennern zugeleitet werden, indem in den Sprachsignal-Empfangskanal rückgekoppelte Signale einer Sprach- oder Musikausgabeeinheit im Sprachsignal-Empfangskanal vor den beiden Spracherkennern, insbesondere vor der Geräuschreduktionseinheit und vorzugsweise mittels adaptiver digitaler Filterverfahren, kompensiert werden.

6. Verfahren nach einem der vorhergehenden Ansprüche, **dadurch gekennzeichnet, daß** die eingegebenen Sprachkommandos nach Digitalisierung blockweise zusammengefaßt und nach einer Gewichtung mittels einer Spektraltransformation, vorzugsweise einer Fast-Fourier-Transformation (FFT), in den Frequenzbereich umgesetzt werden und anschließend durch Betragsbildung und nachfolgender gehörbezogener MEL-Filterung zu Kanalvektoren zusammengefaßt werden und daß daran anschließend eine Segmentierung durchgeführt wird.

7. Verfahren nach Anspruch 6, **dadurch gekennzeichnet, daß** die Segmentierung in eine Grob- und eine Feinsegmentierung unterteilt ist.

8. Verfahren nach einem der Ansprüche 6 oder 7, **dadurch gekennzeichnet, daß** im sprecherunabhängigen Verbundwort-spracherkenner die Merkmalsextraktion dergestalt durchgeführt wird,
• daß die Kanalvektoren mit einer diskreten Cosinustransformation (DCT) in Cepstralvektoren transformiert werden,
• daß zusätzlich die Energie des zugehörigen Signals berechnet und normiert wird,
• daß zur Adaption des Erkenners auf den jeweiligen Sprecher und/oder die jeweiligen Übertragungscharakteristiken des Sprachsignal-Empfangskanals fortlaufend der Mittelwert der Cepstralvektoren berechnet und von den Cepstralvektoren abgezogen wird,
• daß die vom Mittelwert der Cepstralvektoren befreite Cepstralvektoren und die berechnete normierte Signalenergie zu mittelwertfreien Cepstralkoeffizienten (CMF-Vektoren) zusammengefaßt werden.

9. Verfahren nach einem der vorhergehenden Ansprüche, **dadurch gekennzeichnet, daß** der sprecherunabhängige Verbundworterkenner bei der Klassifizierung mit phonem- und/oder ganzwortbasierten Hidden-Markov-Modellen (HMM) arbeitet.

10. Verfahren nach Anspruch 9, **dadurch gekennzeichnet, daß** die Klassifikation mit Hilfe eines Viterbialgorithmus durchgeführt wird und daß der Viterbialgorithmus vorzugsweise durch eine vorgegebene Wortfolgestatistik ergänzt wird.

11. Verfahren nach einem der vorhergehenden Ansprüche, **dadurch gekennzeichnet, daß** bei der Klassifikation zusätzlich auch Füllwörter oder -laute oder sonstige im vorgegebenen Basisvokabular nicht enthaltene Fehlkommandos als solche erkannt und entsprechend klassifiziert und ausgesondert werden.

12. Verfahren nach einem der vorhergehenden Ansprüche, **dadurch gekennzeichnet, daß** der sprecherunabhängige Verbundwort-Spracherkenner und der sprecherabhängige Zusatz-Spracherkenner auf derselben Signalvorverarbeitung für die eingegebenen Sprachkommandos aufsetzen, vorzugsweise einschließlich der Verfahren zur Geräuschreduktion, Echokompensation und Segmentierung.

13. Verfahren nach einem der vorhergehenden Ansprüche, **dadurch gekennzeichnet, daß** der Zusatzspracherkenner als Einzelwortspracherkenner vorzugsweise nach dem Verfahren der dynamischen Zeitnormierung arbeitet.

14. Verfahren nach einem der vorhergehenden Ansprüche, **dadurch gekennzeichnet, daß** der sprecherunabhängige Verbundwort-Spracherkenner und der sprecherabhängige Spracherkenner kombiniert im Verbundwortmodus arbeiten.

15. Verfahren nach einem der vorhergehenden Ansprüche, **dadurch gekennzeichnet, daß** während des Echtzeitbetriebs eine fortlaufende Anpassung des Sprachsignal-Empfangskanals an die analoge Übertragungscharakteristik, insbesondere Raumakustik- und/oder Mikrofon- und/oder Verstärker- und/oder Sprechercharakteristik, erfolgt.

16. Verfahren nach einem der Ansprüche 1 bis 15, **dadurch gekennzeichnet, daß** die vorgegebenen Basiskommandos in sprachcodierter Form vorgegeben und abgespeichert werden und/oder die vom (jeweiligen) Sprecher in Trainingsphasen eingegebenen Zusatzkommandos und/oder im Echtzeitbetrieb eingegebenen Sprachkommandos nach ihrer Eingabe sprachcodiert weiterverarbeitet und/oder nichtflüchtig abgespeichert werden und daß akustisch auszugebende codierte Sprachkommandos vor ihrer Ausgabe sprachdecodiert werden.

17. Verfahren nach einem der Ansprüche 1 bis 15, **dadurch gekennzeichnet, daß** die vorgegebenen Basiskommandos und/ oder die Zusatzkommandos und/oder die im Echtzeitbetrieb eingegebenen Sprachkommandos in Form von Text abgespeichert werden und daß akustisch auszugebende Sprachkommandos vor ihrer Ausgabe einer Text-zu-Sprache-Synthese unterzogen werden.

18. Verfahren nach einem der vorhergehenden Ansprüche, **dadurch gekennzeichnet, daß** die Syntaxstruktur und die sprecherunabhängigen Kommandos vorab im "off-line Dialog Editiermodus" im Labor erstellt und fixiert werden und dem Verbundwort-Spracherkenner in Form von Datenfiles übergeben werden.

19. Verfahren nach einem der vorhergehenden Ansprüche, **dadurch gekennzeichnet, daß**
• die Wortstellung in den Sprachkommandos durch Vertauschen einzelner Worte eines Kommandos veränderbar ist und/oder
• vorgegebene synonyme Worte bei der Bildung von Sprachkommandos nutzbar sind und/oder
• die gleiche Funktion durch Sprachkommandos unterschiedlicher Wortanzahl realisiert werden kann.

20. Verfahren nach einem der vorhergehenden Ansprüche, **dadurch gekennzeichnet, daß** zur Erkennung und anschließender Aussonderung von Einfügungen oder anderer nicht zum Vokabular gehöriger Kommandos dem zulässigen Vokabular weitere Wörter bzw. Lauteinheiten hinzugefügt werden bzw. Wordspottingansätze genutzt werden.

21. Verfahren nach einem der vorhergehenden Ansprüche, **dadurch gekennzeichnet, daß** die Dialogstruktur folgende Eigenschaften aufweist:
• flache Hierarchie mit nur einigen wenigen Hierarchieebenen, vorzugsweise einer oder zweier Hierarchieebenen,
• Einbindung von Ellipsen bei der Abwicklung des Sprachdialogs,
• Einbeziehung von Hilfe- oder Info-Menüs,
• Einbeziehung von Rückfragen des Sprachdialogsystems bei unsicheren Entscheidungen des Erkenners,
• Einbeziehung von Sprachausgaben, um durch Anregung bestimmter Sprechweisen die Erkennsicherheit zu steigern.

22. Verfahren nach einem der vorhergehenden Ansprüche, **dadurch gekennzeichnet, daß** die Spracherkennung bzw. der Sprachdialog zur Steuerung einer oder mehrerer Gerätefunktionen durch vorzugsweise einmalige Betätigung einer Push-to-talk-Taste (PTT) aktiviert wird und diese Aktivierung vorzugsweise akustisch und/oder optisch quittiert wird.

23. Verfahren nach einem der Ansprüche 1 bis 22, **dadurch gekennzeichnet, daß** die Aktivierung automatisch abgebrochen wird, wenn nach einer vorgebbaren oder adaptiv auf den jeweiligen Benutzer eingestellten Zeit und/oder nach einer Rückfrage des Sprachdialogsystems keine Spracheingabe erfolgt ist oder wenn der vom Benutzer ausgewählte Dialog planmäßig abgeschlossen worden ist.

24. Verfahren nach einem der vorhergehenden Ansprüche, **dadurch gekennzeichnet, daß** der Sprachdialog bzw. die Eingabe von Sprachkommandos durch Eingabe eines vorgegebenen speziellen Abbruch-Sprachkommandos an definierten Stellen des Sprachdialogs oder jederzeit durch das Betätigen einer Taste, vorzugsweise der Push-to-talk-Taste oder einer Abbruchtaste, abgebrochen werden kann.

25. Verfahren nach einem der vorhergehenden Ansprüche, **dadurch gekennzeichnet, daß** das Sprachdialogsystem eines oder mehrere der folgenden Leistungsmerkmale aufweist:
• die spezifischen (z.B. trainierten) Sprachkommandos unterschiedlicher Sprecher werden bei Bedarf für spätere Wiederbenutzung festgehalten,
• vom Sprecher trainierte Sprachkommandos bzw. Namen werden während der Trainingsphase nicht nur der Erkennung zugeführt, sondern auch in ihrem zeitlichen Verlauf aufgenommen, einer Datenkompression ("Sprachkodierung") zugeführt und nichtflüchtig gespeichert,
• die vom Sprecher trainierten Sprachkommandos werden während der Trainingsphase derart verarbeitet, daß Umgebungsgeräusche während der Aufnahme weitestgehend kompensiert werden.

26. Verfahren nach einem der vorhergehenden Ansprüche, **dadurch gekennzeichnet, daß** der Abschluß eines Erkennvorganges akustisch durch einen Kontrollton quittiert wird.

27. Verfahren nach einem der vorhergehenden Ansprüche, **dadurch gekennzeichnet, daß** vorzugsweise bei sicherheits-bzw. zeit- oder kostenrelevanten Entscheidungen das Erkennungsergebnis akustisch wiederholt wird (Sprachausgabe) und der Sprecher die Möglichkeit hat, durch ein Sprachkommando oder durch Betätigen eines Schalters, vorzugsweise der Push-to-talk- oder der Abbruchtaste die Ausführung der dem Sprachkommando zugeordneten Funktion zu unterbinden oder rückgängig zu machen.

28. Verfahren nach einem der vorhergehenden Ansprüche, **dadurch gekennzeichnet, daß** das Sprachdialogsystem an ein optisches Anzeigemedium, vorzugsweise ein LCD-Display oder einen Monitor oder ein Display eines angesteuerten Geräts, gekoppelt ist.

29. Verfahren nach Anspruch 28, **dadurch gekennzeichnet, daß** das optische Anzeigenmedium einzelne oder mehrere der folgenden Funktionen übernimmt:
• Ausgabe der erkannten Sprachkommandos zu Kontrollzwecken,
• Darstellung der vom Zielgerät als Reaktion auf das Sprachkommando eingestellten Funktionen,
• Darstellung verschiedener Funktionen/Alternativen, die per Sprachkommando anschließend eingestellt bzw. ausgewählt oder modifiziert werden.

30. Verfahren nach einem der vorhergehenden Ansprüche, **dadurch gekennzeichnet, daß** jeder Sprecher eigene Namens-oder Abkürzungslisten einrichten kann mit einem oder mehreren oder allen der folgenden Merkmale:
• der vom Sprecher beim sprecherabhängigen Erkenner trainierte Namen repräsentiert eine Ziffernkette, Buchstabenkette und/oder ein Kommando bzw. eine Kommandosequenz, die im sprecherunabhängigen Betriebsmodus eingegeben wurde,
• anstelle der erneuten Eingabe der Ziffernkette, Buchstabenkette oder Kommandosequenz kann der Benutzer die Listenbezeichnung und den von ihm gewählten Namen eingeben, oder neben dem Namen ein geeignetes Kommando eingeben, welches auf die richtige Liste schließen läßt,
• die Liste kann sprachgesteuert jederzeit um weitere Einträge erweitert werden,
• die Liste kann sprachgesteuert komplett oder selektiv gelöscht werden,
• die Liste kann auf einen Sprachbefehl hin abgehört werden, wobei die vom Benutzer eingegebenen Namen und bei Bedarf die zugehörigen Ziffernkette, Buchstabenkette bzw. Kommandos akustisch ausgegeben werden,
• die akustische Ausgabe der Liste kann zu jedem beliebigen Zeitpunkt abgebrochen werden.

31. Verfahren nach einem der vorhergehenden Ansprüche, **dadurch gekennzeichnet, daß** eine Folge von Ziffern (Ziffernkolonne) an einem Stück zusammenhängend oder blockweise eingesprochen werden kann, wobei die Spracheingabe bzw. der Sprachdialog vorzugsweise eines oder mehrere oder alle der folgenden Merkmale aufweist:
• nach jeder Eingabepause erfolgt eine Quittierung, indem der letzte Eingabeblock von der Sprachausgabe wiederholt wird,
• nach der Quittierung durch ein Sprachkommando "Fehler" o.ä. wird der letzte Eingabeblock gelöscht und die verbleibenden, gespeicherten Blöcke akustisch ausgegeben,
• nach der Quittierung durch ein Sprachkommando "Löschen" o.ä. werden alle eingegebenen Ziffernblöcke gelöscht,
• nach der Quittierung durch ein Sprachkommando "wiederholen" o.ä. werden die bisher gespeicherten Blöcke akustisch ausgegeben,
• nach der Quittierung durch ein Sprachkommando "Abbruch" o.ä. wird die Eingabe der Ziffernkolonne vollständig abgebrochen,
• nach der Quittierung können weitere Ziffern bzw. Ziffernblöcke eingegeben werden,
• nach der Quittierung wird die Zifferneingabe durch ein geeignetes Sprachkommando "stop", "speichern" o.ä. abgeschlossen,
• durch Eingabe eines eine Aktion/Funktion startenden Sprachkommandos wie "wählen" o.ä. wird die Eingabe abgeschlossen und die dem Sprachkommando zugeordnete Aktion/ Funktion initiiert.

32. Verfahren nach einem der vorhergehenden Ansprüche, **dadurch gekennzeichnet, daß** eine Folge von Buchstaben (Buchstabenkolonne) eingesprochen wird, welche zur Auswahl komplexer Funktionen bzw. zur Eingabe einer Vielzahl von Informationen vorgesehen ist, wobei die Buchstabenkolonne zusammenhängend oder blockweise eingegeben wird und die Spracheingabe bzw. der Sprachdialog vorzugsweise eines oder mehrere oder alle der folgenen Merkmale aufweist:
• nach jeder Eingabepause erfolgt eine Quittierung, indem der letzte Eingabeblock von der Sprachausgabe wiederholt wird,
• nach der Quittierung durch ein Sprachkommando "Fehler" o.ä. wird der letzte Eingabeblock gelöscht und die verbleibenden, gespeicherten Blöcke akustisch ausgegeben,
• nach der Quittierung durch ein Sprachkommando "Löschen" o.ä. werden alle eingegebenen Buchstaben gelöscht und im Anschluß daran kann eine erneute Eingabe erfolgen,
• nach der Quittierung durch ein Sprachkommando "wiederholen" o.ä. werden die bisher gespeicherten Blöcke akustisch ausgegeben,
• nach der Quittierung können weitere Buchstaben bzw. Buchstabenblöcke eingegeben werden,
• gegebenenfalls erfolgt ein Abgleich der Buchstabenkolonne oder der einzelnen Buchstabenblocks mit einer gespeicherten Wortliste und es wird (werden) daraus das (die) bestpassende(n) Wort (Wörter) extrahiert,
• nach der Quittierung durch ein Sprachkommando "Abbruch" o.ä. wird die Eingabe der Buchstabenkolonne vollständig abgebrochen,
• nach der Quittierung wird die Buchstabeneingabe durch ein Sprachkommando "stop", "speichern" o.ä. abgeschlossen,
• durch Eingabe eines eine Aktion/Funktion startenden Sprachkommandos wie "wählen" o.ä. wird die Eingabe abgeschlossen und die dem Sprachkommando zugeordnete Aktion/ Funktion initiiert.

33. Verfahren nach einem der Ansprüche 31 oder 32, **dadurch gekennzeichnet, daß** bei der auf das Sprachkommando "Fehler" o.ä, bzw. auf das Sprachkommando "wiederholen" o.ä. folgenden Ausgabe der bisher eingesprochenen Ziffern dieselbe Blockung benutzt wird wie bei der Eingabe.

34. Verfahren nach einem der vorhergehenden Ansprüche, **dadurch gekennzeichnet, daß** die Ausgabelautstärke der Sprachausgabe und des Kontrolltons den Umgebungsgeräuschen angepaßt sind, wobei die Umgebungsgeräusche während der Sprachpausen bezüglich ihrer Stärke und Charakteristik erfaßt werden.

35. Verfahren nach einem der vorhergehenden Ansprüche, **dadurch gekennzeichnet, daß** der Zugang zum Sprachdialogsystem bzw. der Zugriff auf benutzerspezifische Daten/Kommandos nur durch Eingabe spezieller Kommandoworte bzw. durch Eingabe spezieller Kommandoworte eines autorisierten Sprechers erfolgt, dessen Sprachcharakteristika dem Sprachdialogsystem bekannt sind und von diesem geprüft werden.

36. Verfahren nach einem der vorhergehenden Ansprüche, **dadurch gekennzeichnet, daß** länger andauernde Sprachausgaben (z.B. Info-Menüs) durch gesprochene oder manuelle Abbruchkommandos vorzeitig beendet werden können.

37. Verfahren nach einem der vorhergehenden Ansprüche, **dadurch gekennzeichnet, daß** das Sprachdialogsystem in einer der folgenden Formen die manuelle Bedienung obiger Funktionen (z.B. per Schalter, Taste, Drehknopf) ergänzt oder ersetzt:
• Die Sprachkommandierung existiert neben der manuellen Bedienung, so daß die Bedienung jederzeit manuell erfolgen bzw. weitergeführt werden kann;
• einige spezielle Leistungsmerkmale sind nur per Spracheingabe aktivierbar, die anderen Geräte- und Bedienfunktionen bleiben sowohl manuell wie per Sprache kommandierbar;
• die Anzahl der manuellen Bedienelemente wird deutlich reduziert, einzelne Tasten bzw. Drehknöpfe übernehmen Mehrfachfunktion; per Sprache wird manuellen Bedienelementen eine spezielle Funktion zugewiesen; nur wesentliche Bedienfunktionen sind noch manuell ansteuerbar; die Basis der Bedienfunktionen ist die Sprachkommandierung.

38. Verfahren nach einem der vorhergehenden Ansprüche, **dadurch gekennzeichnet, daß** mit einem einzigen Einzelwortoder Mehrwortkommando eine Vielzahl unterschiedliche Geräte sowie Gerätefunktionen ansprech- und modifizierbar sind und somit eine mehrstufige Vorgehensweise nicht oder nur in einem geringen Umfang erforderlich ist.

39. Verfahren nach einem der vorhergehenden Ansprüche, **dadurch gekennzeichnet, daß** das Sprachdialogsystem in Fahrzeugen für einzelne oder mehrere der im folgenden genannten Funktionen zur Anwendung kommt:
• Bedienung einzelner oder mehrerer Geräte, wie z.B. Autotelefon, Autoradio (ggf. mit Kassette, CD-Wechsler, Soundsystem), Navigationssystem, Notruf, Bordmonitor, Klimaanlage, Heizung, Reiserechner, Beleuchtung, Schiebedach, Fensterheber, Sitzversteller;
• Informationsabfrage von Parametern, wie z.B. Öldruck, -temperatur, Kühlwassertemperatur, Verbrauch, Reifendruck;
• Information über notwendige Maßnahmen z.B. bei zu hoher Kühlwassertemperatur, zu geringem Reifendruck;
• Warnung des Fahrers bei Defekten des Fahrzeugs.

40. Verfahren nach Anspruch 39, **dadurch gekennzeichnet, daß** die sprachgesteuerte Auswahl eines neuen Senders im Autoradio nach einem der folgenden Abläufe erfolgt:
• Kommandierung des Suchlaufs auf- bzw. abwärts,
• Spracheingabe der Senderfrequenz vorzugsweise in der umgangssprachlichen Form, vorzugsweise einschließlich der Frequenzangabe,
• Spracheingabe des gebräuchlichen Sendernamens.

41. Verfahren nach Anspruch 39, **dadurch gekennzeichnet, daß** bei der Klimaanlage die gewünschte Temperatur per Spracheingabe relativ und/oder vorzugsweise absolut festgelegt werden kann und vorzugsweise zusätzlich eine minimale bzw. maximale bzw. mittlere Temperatur bzw. Normaltemperatur kommandiert werden kann.

42. Verfahren nach Anspruch 39, **dadurch gekennzeichnet, daß** dem Navigationssystem ein Zielort (Ortsname, Straßenname) durch Eingabe von Buchstabenkolonnen im "Buchstabiermode" mitgeteilt wird, wobei vorzugsweise auch der Anfang des Namens als Eingabe genügt und das Navigationssystem gegebenfalls mehrere Kandidaten zur Auswahl anbietet.

43. Verfahren nach einem der Ansprüche 39 bis 42, **dadurch gekennzeichnet, daß** eine oder mehrere der folgenden benutzerspezifischen Namenslisten eingerichtet werden:
• Liste zur Speicherung von Telefonnummern unter vorgebbaren Namen/Abkürzungen,
• Liste zur Speicherung von Zielen für das Navigationssystem unter vorgebbaren Namen/Abkürzungen,
• Liste zur Speicherung von Funktionsnamen für Kommandos oder Kommandofolgen,
• Liste zur Speicherung von Senderfrequenzen des Autoradios unter vorgebbaren Sendernamen bzw. Abkürzungen.

44. Verfahren nach einem der Ansprüche 39 bis 43, **dadurch gekennzeichnet, daß** die Ausgabelautstärke der Sprachausgabe und des Kontrolltons oder der Kontrolltöne, ggf. auch die Radiolautstärke, unter Berücksichtigung eines oder mehrerer der folgenden Parameter festgelegt oder adaptiv angepaßt werden:
• Fahrzeuggeschwindigkeit
• Gebläseeinstellung
• Drehzahl
• Öffnungsbreite der Fenster und des Schiebedaches
• Fahrzeugtyp,
• Wichtigkeit der Sprachausgabe in der jeweiligen Dialogsituation.

45. Verfahren nach einem der Ansprüche 22 bis 44, **dadurch gekennzeichnet, daß** die Push-to-talk-Taste
• entweder Mehrfachfunktionen wahrnimmt oder beinhaltet, z.B. während des Telefonierens ( "Auflegen des Hörers", "Abheben des Hörers") bzw. beim Neustart des Sprachdialogsystems bzw. beim Abbruch eines Telefonwahlvorganges,
• oder ergänzt wird durch einen zusätzlichen Schalter oder eine zusätzliche Schaltposition, welche z.B. einen Neustart oder den Abbruch einer Funktion erlauben.

46. Vorrichtung zum Ausführen des Verfahrens nach einem der vorhergehenden Ansprüche, bei welcher eine Spracheingabe-/-ausgabeeinheit über eine Sprachsignalvorverarbeitungseinheit mit einer Spracherkennungseinheit verbunden ist, die wiederum mit einer Ablauf-, Dialog- und Schnittstellensteuerung verbunden ist, **dadurch gekennzeichnet, daß** die Spracherkennungseinheit aus einem sprecherunabhängigen Verbundworterkenner und einem sprecherabhängigen Zusatz-Spracherkenner besteht, die beide ausgangsseitig mit einer Einheit zur syntaktisch-grammatikalischen bzw. semantischen Nachverarbeitung verbunden sind, die mit der Ablauf-, Dialog- und Schnittstellensteuerung verbunden ist.

47. Vorrichtung nach Anspruch 46, **dadurch gekennzeichnet, daß** die Sprachsignalvorverarbeitungseinheit eine Vorrichtung zur Geräuschreduktion und/oder eine Vorrichtung zur Echokompensation und/oder eine Vorrichtung zur Segmentierung enthält.

48. Vorrichtung nach einem der Ansprüche 46 oder 47, **dadurch gekennzeichnet, daß** die Spracheingabe-/-ausgabeeinheit einen Sprachencoder, einen Sprachdecoder sowie einen Sprachspeicher enthält.

49. Vorrichtung nach einem der Ansprüche 46 bis 48, **dadurch gekennzeichnet, daß** die Ablauf-, Dialog- und Schnittstellensteuerung, die Sprachein-/-ausgabe sowie die Sprachsignalvorverarbeitung, Spracherkennung, syntaktisch-grammatikalische und semantische Nachverarbeitung mittels Mikro- und Signalprozessoren, Speichern und Schnittstellenbausteine erfolgt, vorzugsweise aber mit einem einzigen digitalen Signal- oder Mikroprozessor sowie dem erforderlichen externen Daten- und Programmspeicher, den Interfaces sowie den zugehörigen Treiberbausteinen, einem Taktgenerator, einer Steuerlogik und den für Sprachein-/-ausgabe erforderlichen Mikrofonen und Lautsprechern samt zugehörigen Wandlern und Verstärkern sowie gegebenenfalls einer Push-to-talk(PTT)-Taste und einer Abbruchtaste.

50. Vorrichtung nach Anspruch 49, **dadurch gekennzeichnet, daß** über ein oder mehrere Interfaces
• Daten und/oder Parameter ladbar bzw. nachladbar sind, um z.B. Verfahrensänderungen oder ein Sprachdialogsystem für eine andere Sprache zu realisieren,
• die auf einem separaten Rechner festgelegte oder modifizierte Syntaxstruktur, Dialogstruktur, Ablaufsteuerung, Sprachausgabe etc. auf das Sprachdialogsystem übertragen werden ("off-linie Dialog-Editor"),
• Status- oder Diagnoseinformationen vom Sprachdialogsystem angefordert und abgeholt werden können.

51. Vorrichtung nach Anspruch 49, **dadurch gekennzeichnet, daß** diese mit mehreren der anzusteuernden Geräte über ein Bussystem oder ein ringförmiges Netzwerk verknüpft ist und daß über diesen Bus bzw. das Netzwerk Steuerdaten und/oder Audiosignale und/oder Statusmeldungen des Sprachdialogsystems und/oder der zu bedienenden Geräte übertragen werden.

52. Vorrichtung nach einem der Ansprüche 46 bis 51 für die Anwendung in Fahrzeugen, **dadurch gekennzeichnet, daß** die einzelnen anzusteuernden Geräte nicht jeweils ein eigenes Sprachdialogsystem enthalten, sondern von einem einzigen gemeinsamen Sprachdialogsystem bedient werden.

53. Vorrichtung nach einem der Ansprüche 46 bis 52, **dadurch gekennzeichnet, daß** eine oder mehrere Schnittstellen zu Fahrzeugkomponenten oder Fahrzeugrechnern bestehen, worüber permanente oder aktuelle Fahrzeugdaten dem Sprachdialogsystem mitgeteilt werden, wie z. B. Geschwindigkeit.

54. Vorrichtung nach einem der Ansprüche 46 bis 53, **dadurch gekennzeichnet, daß** diese Vorrichtung während der Wartezeiten, in denen keine Sprachein- oder -ausgabe erfolgt, andere Funktionen z.B. des Radios, des Telefons o.ä. übernimmt.

55. Vorrichtung nach einem der Ansprüche 46 bis 54, **dadurch gekennzeichnet, daß** mittels eines erweiterten Speichers ein multilinguales sprecherunabhängiges Dialogsystem realisiert ist, wobei zwischen den Dialogsystemen verschiedener Sprachen umgeschaltet werden kann.

56. Vorrichtung nach einem der Ansprüche 46 bis 55, **dadurch gekennzeichnet, daß** ein optisches Display mit dem Sprachdialogsystem über ein spezielles Interface bzw. über den Busanschluß gekoppelt ist.

57. Vorrichtung nach einem der Ansprüche 46 bis 56, **dadurch gekennzeichnet, daß** das vollständige Sprachdialogsystem über eine PCMCIA-Schnittstelle mit dem per Sprache zu steuernden bzw. zu bedienenden Gerät bzw. einem Host- oder Applikationsrechner gekoppelt ist.

58. Vorrichtung nach Anspruch 51 oder 57, **dadurch gekennzeichnet, daß** dieser Bus oder dieses Netzwerk ein optischer Datenbus ist und hierüber sowohl Steuer- wie Audiosignale bzw. Statusmeldungen des Sprachdialogsystems und der zu bedienenden Geräte übertragen werden.

## Claims

1. Method for automatic control of one or more appliances by voice commands or by voice dialogue in real-time operation,
**characterized by** the following features:
- the entered voice commands are recognized by means of a speaker-independent word combination voice recognizer and a speaker-dependent additional voice recognizer and are classified on the basis of their recognition probability,
- recognized permissible voice commands are checked for their plausibility, and that permissible and plausible voice command having the greatest recognition probability is identified as the entered voice command, and those functions of the appliance or appliances and responses of the voice dialogue system which are associated with this voice command are initiated or generated.

2. Method according to Claim 1, **characterized by** the following features:
• the voice commands (the voice dialogue) are (is) formed (carried out) on the basis of at least one syntax structure, at least one basic command vocabulary and, if required, at least one speaker-specific additional command vocabulary;
• the syntax structure or structures and the basic command vocabulary or vocabularies are predetermined in speaker-independent form and are fixed during real-time operation;
• the speaker-specific additional command vocabulary or vocabularies is or are entered and/or amended by the (respective) speaker in that, during training phases within and/or outside real-time operation, an additional voice recognizer which operates using a speaker-dependent recognition method is trained by the (respective) speaker to the speech-specific features of the (respective) speaker by entering the additional commands one or more times;
• in real-time operation, the voice dialogue and/or the control of the appliance (of the appliances) are/is carried out as follows:
- voice commands entered by the (respective) speaker are passed to a speaker-independent word combination voice recognizer, which operates on the basis of phonemes and/or entire word models, and to the speaker-dependent additional voice recognizer and are (in each case) subjected there to feature extraction, and
- are investigated and classified in the word combination voice recognizer, on the basis of the features extracted there, for the presence of basic commands from the (respective) basic command vocabulary, in accordance with the (respective) predetermined syntax structure, and
- are investigated and classified in the speaker-dependent additional voice recognizer, on the basis of the features extracted there, for the presence of additional commands from the (respective) additional command vocabulary;
- those commands and syntax structures of the two voice recognizers which have been classified as recognized with a specific probability are then combined to form hypothetical voice commands, and these are investigated and classified for their reliability and probability of recognition on the basis of the predetermined syntax structure;
- the permissible hypothetical voice commands are then investigated on the basis of predetermined criteria for their plausibility and, of those hypothetical voice commands which are recognized as being plausible, that with the highest recognition probability is selected and is identified as the voice command entered by the (respective) speaker;
- that function or those functions of the (respective) appliance to be controlled and which is or are associated with the identified voice command is or are then initiated, and/or
- the response or responses which is or are associated with the identified voice command is or are then generated on the basis of a predetermined voice dialogue structure, in order to continue the voice dialogue.

3. Method according to one of Claims 1 or 2, **characterized in that** the voice commands are entered acoustically, preferably using a hands-free device.

4. Method according to one of the preceding claims, **characterized in that** acoustically entered voice commands are supplied, with the noise-level reduced, to the two voice recognizers **in that** noise signals which are caused by steady-state or virtually steady-state environmental noise in the speech signal reception channel are compensated for preferably by means of adaptive digital filtering methods, upstream of the two voice recognizers.

5. Method according to one of the preceding claims, **characterized in that** acoustically entered voice commands are supplied after echo compensation to the two voice recognizers, **in that** signals of a voice or music output unit which are fed back into the voice signal reception channel are compensated for in the voice signal reception channel upstream of the two voice recognizers, in particular upstream of the noise reduction unit, and preferably by means of adaptive digital filtering methods.

6. Method according to one of the preceding claims, **characterized in that** the entered voice commands are combined block-by-block after digitization and, after being weighted, are converted by means of spectral transformation, preferably by means of a fast Fourier transformation (FFT), to the frequency band, and are then combined by magnitude formation and subsequent hearing-related MEL filtering to form channel vectors, and **in that** they are then subjected to segmentation.

7. Method according to Claim 6, **characterized in that** the segmentation is subdivided into coarse segmentation and fine segmentation.

8. Method according to one of Claims 6 or 7, **characterized in that** the feature extraction in the speaker-independent word combination voice recognizer is carried out in such a way
• that the channel vectors are transformed by discrete cosine transformation (DCT) into cepstral vectors,
• that, in addition, the energy of the associated signal is calculated and is normalized,
• that, for adaptation of the recognizer to the respective speaker and/or the respective transmission characteristics of the voice signal reception channel, the mean value of the cepstral vectors is calculated continuously and is subtracted from the cepstral vectors,
• that the cepstral vectors from which the mean value of the cepstral vectors has been subtracted, and the calculated normalized signal energy are combined to form cepstral mean free coefficients (CMF vectors).

9. Method according to one of the preceding claims, **characterized in that** the speaker-independent word combination recognizer operates using phoneme-and/or entire-word-based hidden Markov models (HMM).

10. Method according to Claim 9, **characterized in that** the classification is carried out using a Viterbi algorithm, and **in that** the Viterbi algorithm is preferably supplemented by predetermined word-sequence statistics.

11. Method according to one of the preceding claims, **characterized in that** filling words or sounds or other incorrect commands not included in the predetermined basic vocabulary are also recognized as such during the classification process, and are segregated out.

12. Method according to one of the preceding claims, **characterized in that** the speaker-independent word combination voice recognizer and the speaker-dependent additional voice recognizer are subject to the same signal pre-processing for the entered voice commands, preferably including the methods for noise reduction, echo compensation and segmentation.

13. Method according to one of the preceding claims, **characterized in that** the additional voice recognizer operates as an individual word voice recognizer, preferably using the dynamic time normalization method.

14. Method according to one of the preceding claims, **characterized in that** the speaker-independent word combination voice recognizer and the speaker-dependent voice recognizer operate combined in a word combination mode.

15. Method according to one of the preceding claims, **characterized in that**, during real-time operation, the voice signal reception channel is continuously matched to the analogue transmission characteristic, in particular to the spatial acoustics and/or microphone and/or amplifier and/or speaker characteristics.

16. Method according to one of Claims 1 to 15, **characterized in that** the predetermined basic commands are predetermined and stored in voice-coded form, and/or the additional commands entered by the (respective) speaker in training phases and/or voice commands entered in real-time operation are further processed on a voice-coded basis after they have been entered and/or are stored in non-volatile form, and **in that** coded voice commands which are intended to be output acoustically are voice-decoded before they are output.

17. Method according to one of Claims 1 to 15, **characterized in that** the predetermined basic commands and/or the additional commands and/or the voice commands entered in real-time operation are stored in the form of text, and **in that** voice commands which are intended to be output acoustically are subjected to text-to-speech synthesis before they are output.

18. Method according to one of the preceding claims, **characterized in that** the syntax structure and the speaker-independent commands are produced and are fixed in advance in the "off-line dialogue editing mode" in the laboratory, and are transferred to the word combination voice recognizer in the form of data files.

19. Method according to one of the preceding claims, **characterized in that**
• the word position in the voice commands can be varied by interchanging individual words in a command, and/or
• predetermined synonymous words can be used for forming voice commands, and/or
• the same function can be provided by voice commands having a different number of words.

20. Method according to one of the preceding claims, **characterized in that** further words or sound units are added to the permissible vocabulary and/or word spotting rules are used in order to recognize and then to segregate out insertions or other commands which are not contained in the vocabulary.

21. Method according to one of the preceding claims, **characterized in that** the dialogue structure has the following characteristics:
• flat hierarchy with only a small number of hierarchy levels, preferably one or two hierarchy levels,
• inclusion of ellipses in the handling of the voice dialogue,
• inclusion of help or information menus,
• inclusion of queries from the voice dialogue system in the event of uncertain decisions by the recognizer,
• inclusion of voice outputs in order to improve the recognition certainty by encouraging specific ways of speaking.

22. Method according to one of the preceding claims, **characterized in that** the voice recognition or the voice dialogue for controlling one or more appliance functions is activated by operating, preferably once, a push-to-talk key (PTT), and this activation is preferably acknowledged acoustically and/or visually.

23. Method according to one of Claims 1 to 22, **characterized in that** the activation is terminated automatically if no voice input is made within a time which can be predetermined or is set adaptively to the respective user and/or after a query from the voice dialogue system, or when the dialogue selected by the user has been completed to plan.

24. Method according to one of the preceding claims, **characterized in that** the voice dialogue or the entry of voice commands can be terminated by entering a predetermined specific termination voice command at defined points in the voice dialogue, or at any time by operating a key, preferably the push-to-talk key or a terminate key.

25. Method according to one of the preceding claims, **characterized in that** the voice dialogue system has one or more of the following performance features:
• the specific (for example trained) voice commands from different speakers are saved, if required, for subsequent re-use,
• voice commands or names trained by the speaker are not only supplied to the recognition process during the training phase, but their time profile is also recorded and they are supplied to data compression (voice coding), and are stored in a non-volatile form,
• the voice commands trained by the speaker are processed during the training phase in such a manner that environmental noise is very largely compensated for during the recording process.

26. Method according to one of the preceding claims, **characterized in that** the completion of a recognition process is acknowledged acoustically by means of a monitoring tone.

27. Method according to one of the preceding claims, **characterized in that**, in the event of safety-relevant and time- or cost-relevant decisions, the recognition result is repeated acoustically (voice output), and the speaker has the capability to suppress or to counteract the execution of the function associated with the voice command, by means of a voice command or by operating a switch, preferably the push-to-talk key or the terminate key.

28. Method according to one of the preceding claims, **characterized in that** the voice dialogue system is coupled to a visual display medium, preferably an LCD display, a monitor or a display of a driven appliance.

29. Method according to Claim 28, **characterized in that** the visual display medium carries out individual ones or a number of the following functions:
• output of the recognized voice commands for monitoring purposes,
• display of the functions set by the end appliance as a reaction to the voice command,
• display of various functions/alternatives, which are then set, selected or modified by voice command.

30. Method according to one of the preceding claims, **characterized in that** each speaker can set up his own name or abbreviation lists with one or more, or all, of the following features:
• the name trained by the speaker for the speaker-dependent recognizer represents a number chain, letter chain and/or command or a command sequence which has been entered in the speaker-independent operating mode,
• instead of once again entering the number chain, letter chain or command sequence, the user can enter the list designation and the name selected by him or, in addition to the name, can enter a suitable command which allows the correct list to be deduced,
• the list can be expanded by further entries at any time by voice control,
• the list can be deleted completely or selectively by voice control,
• the list can be monitored for a voice command, with the name entered by the user and, if required, the associated number chain, letter chain or commands being output acoustically,
• the acoustic output of the list can be terminated at any desired time.

31. Method according to one of the preceding claims, **characterized in that** a sequence of numbers (number string) can be spoken cohesively in one go or can be spoken block-by-block, with the voice input or the voice dialogue preferably having one or more, or all, of the following features:
• each input pause is followed by an acknowledgement, by the last input block being repeated by the voice output,
• after acknowledgement by an "error" voice command or the like, the last input block is deleted, and the remaining, stored blocks are output acoustically,
• after acknowledgement by a "delete" voice command or the like, all the entered character blocks are deleted,
• after acknowledgement by a "repeat" voice command or the like, the previously stored blocks are output acoustically,
• after acknowledgement by a "terminate" voice command or the like, the entry of the number string is completely terminated,
• after acknowledgement, further numbers or number blocks can be entered,
• after acknowledgement, the number input is terminated by a suitable "stop", "save" voice command or the like,
• by entering a voice command such as "select" or the like, which starts an action/function, the entry is terminated and the action/function associated with that voice command is initiated.

32. Method according to one of the preceding claims, **characterized in that** a sequence of letters (letter string) is spoken and is intended for selection of complex functions or for entering a large number of information items, with the letter string being entered cohesively or block-by-block, and the voice input or the voice dialogue preferably having one or more, or all, of the following features:
• each input pause is followed by an acknowledgement, by the last input block being repeated by the voice output,
• after acknowledgement by an "error" voice command or the like, the last input block is deleted, and the remaining, stored blocks are output acoustically,
• after acknowledgement by a "delete" voice command or the like, all the entered letters are deleted, and another entry can then be made,
• after acknowledgement by a "repeat" voice command or the like, the previously stored blocks are output acoustically,
• after acknowledgement, further letters or letter blocks can be entered,
• if required, the letter string or the individual letter blocks are matched to a stored word list and the best-matching word or words is or are extracted from that word list,
• after acknowledgement by a "terminate" voice command or the like, the entry of the letter string is completely terminated,
• after acknowledgement, the letter input is terminated by a "stop", "save" voice command or the like,
• by entering a voice command such as "select" or the like, which starts an action/function, the entry is terminated and the action/function associated with that voice command is initiated.

33. Method according to one of Claims 31 or 32, **characterized in that** the output of the previously spoken numbers which follows the "error" voice command or the like or the "repeat" voice command or the like uses the same block formation as when it was entered.

34. Method according to one of the preceding claims, **characterized in that** the output volume of the voice output and of the monitoring tone is matched to the environmental noise, with the intensity and characteristic of the environmental noise being detected during the voice pauses.

35. Method according to one of the preceding claims, **characterized in that** the access to the voice dialogue system and/or the access to user-specific data/commands are made only by entering specific command words or by entering specific command words from an authorized speaker whose voice characteristics are known to the voice dialogue system, and are checked by it.

36. Method according to one of the preceding claims, **characterized in that** longer-lasting voice outputs (for example information menus) can be ended prematurely by spoken or manual terminate commands.

37. Method according to one of the preceding claims, **characterized in that** the voice dialogue system supplements or replaces the manual control of the above functions (for example by switches, keys, pushbuttons) in one of the following forms:
• the voice command process exists alongside manual control, so that control can be carried out or continued at any time manually;
• a number of specific performance features can be activated only by voice input, while the other appliance and control functions can still be commanded both manually and by voice;
• the number of manual control elements is considerably reduced with individual keys or pushbuttons carrying out multiple functions; voice is used to assign a specific function to manual control elements; only major control functions can still be actuated manually; the basis of the control functions is the voice command process.

38. Method according to one of the preceding claims, **characterized in that** a large number of different appliances and appliance functions can be addressed and modified by a single individual word or multiple word command, so that there is no need for a multi-step procedure, or such a procedure is required only to a minor extent.

39. Method according to one of the preceding claims, **characterized in that** the voice dialogue system is used in motor vehicles, for one or more of the functions cited in the following text:
• control of one or more appliances, such as a car telephone, car radio (possibly with a cassette, CD changer, sound system), navigation system, paging, an on-board monitor, an air-conditioning system, heating, a travel computer, lighting, a sunroof, a window winder, a seat adjuster;
• information checking of parameters, such as oil pressure and temperature, cooling-water temperature, consumption, tyre pressure;
• information relating to required actions, for example excessively high cooling-water temperature, excessively low tyre pressure;
• warning the driver of defects in the vehicle.

40. Method according to Claim 39, **characterized in that** voice-controlled selection of a new transmitter for the car radio is carried out using one of the following sequences:
• command for an up or down search,
• voice input of the transmitter frequency, preferably in the normal language form, preferably including an indication of the frequency,
• voice input of the normal transmitter name.

41. Method according to Claim 39, **characterized in that**, for the air-conditioning system, the desired temperature can be defined relatively and/or preferably absolutely by voice input and, preferably and additionally, a minimum, maximum or mean temperature or normal temperature can be commanded.

42. Method according to Claim 39, **characterized in that** a destination location (location name, road name) can be reported to the navigation system by entering letter strings in the "spelling mode", with the start of the name preferably also being sufficient as the entry, and the navigation system if necessary offering a number of candidates for selection.

43. Method according to one of Claims 39 to 42, **characterized in that** one or more of the following user-specific name lists are set up:
• list for storing telephone numbers under names/abbreviations which can be predetermined,
• list for storing destinations for the navigation system under names/abbreviations which can be predetermined,
• list for storing function names for commands or command sequences,
• list for storing transmitter frequencies for the car radio under transmitter names or abbreviations which can be predetermined.

44. Method according to one of Claims 39 to 43, **characterized in that** the output volume of the voice output and of the monitoring tone or monitoring tones, and possibly the radio volume as well, are defined or adaptively matched taking account of one or more of the following parameters:
• vehicle speed
• fan setting
• engine speed
• extent to which the windows and sunroof are open
• vehicle type
• importance of the voice output in the respective dialogue situation.

45. Method according to one of Claims 22 to 44, **characterized in that** the push-to-talk key
• either carries out or includes multiple functions, for example ("place the handset on the rest", "lift-off the handset") when telephoning or when restarting the voice dialogue system or terminating a telephone dialling process,
• or is supplemented by an additional switch or an additional switch position which, for example, allow a function to be restarted or terminated.

46. Apparatus for carrying out the method according to one of the preceding claims, in which a voice input/output unit is connected via a voice signal pre-processing unit to a voice recognition unit, which is in turn connected to a sequence, dialogue and interface controller, **characterized in that** the voice recognition unit comprises a speaker-independent word combination recognizer and a speaker-dependent additional voice recognizer, both of whose output sides are connected to the unit for syntax-grammatical or semantic post-processing, which is connected to the sequence, dialogue and interface controller.

47. Apparatus according to Claim 46, **characterized in that** the voice signal pre-processing unit contains an apparatus for noise reduction and/or an apparatus for echo compensation and/or an apparatus for segmentation.

48. Apparatus according to one of Claims 46 or 47, **characterized in that** the voice input/output unit contains a voice coder, a voice decoder and a voice memory.

49. Apparatus according to one of Claims 46 to 48, **characterized in that** the sequence, dialogue and interface controller, the voice input/output and the voice signal pre-processing, voice recognition, syntax-grammatical and semantic post-processing are carried out by means of microprocessors and signal processors, memories and interface modules, but preferably with a single digital signal or microprocessor and the necessary external data and program memory, the interfaces and the associated driver modules, a clock generator, control logic and the microphones and loudspeakers required for voice inputting/outputting, together with associated transducers and amplifiers and, if required, a push-to-talk (PTT) key and a terminate key.

50. Apparatus according to Claim 49, **characterized in that**, via one or more interfaces,
• data and/or parameters can be loaded or reloaded in order, for example to implement method changes or a voice dialogue system for another language,
• the syntax structure, dialogue structure, sequence control and voice output etc. which are defined or modified on a separate computer are transferred to the voice dialogue system ("off-line dialogue editor"),
• status or diagnosis information can be requested and retrieved from the voice dialogue system.

51. Apparatus according to Claim 49, **characterized in that** this apparatus is linked by a bus system or a ring network to a number of the appliances to be actuated, and **in that** control data and/or audio signals and/or status messages relating to the voice dialogue system and/or to the appliances to be controlled are transmitted via this bus or the network.

52. Apparatus according to one of Claims 46 to 51 for use in vehicles, **characterized in that** the individual appliances to be actuated do not each contain their own voice dialogue system, but are controlled from a single, common voice dialogue system.

53. Apparatus according to one of Claims 46 to 52, **characterized in that** one or more interfaces exist for vehicle components or vehicle computers, via which permanent or up-to-date vehicle data, such as the speed, are reported to the voice dialogue system.

54. Apparatus according to one of Claims 46 to 53, **characterized in that** this apparatus carries out other functions relating, for example, to the radio, the telephone or the like during waiting times in which there is no voice input or output.

55. Apparatus according to one of Claims 46 to 54, **characterized in that** a multilingual speaker-independent dialogue system is provided by means of an enlarged memory, with the capability to switch between the dialogue systems of different languages.

56. Apparatus according to one of Claims 46 to 55, **characterized in that** a visual display is coupled to the voice dialogue system via a special interface or via the bus connection.

57. Apparatus according to one of Claims 46 to 56, **characterized in that** the entire voice dialogue system is coupled via a PCMCIA interface to the appliance which is to be operated or controlled by voice, and/or to a host or application computer.

58. Apparatus according to Claim 51 or 57, **characterized in that** this bus or this network is an optical data bus, and both control and audio signals and/or status messages for the voice dialogue system and the appliances to be controlled are transmitted via this data bus.

## Revendications

1. Procédé de commande automatique d'un ou de plusieurs dispositifs par des instructions vocales ou par un dialogue vocal en fonctionnement en temps réel,
**caractérisé par** les caractéristiques suivantes :
- les instructions vocales entrées sont reconnues au moyen d'une unité de reconnaissance vocale de combinaisons de mots indépendante du locuteur et d'une unité de reconnaissance vocale supplémentaire dépendant du locuteur, et sont classées sur la base de leur probabilité de reconnaissance,
- la plausibilité des instructions vocales admissibles reconnues est vérifiée, et l'instruction vocale admissible et plausible ayant la plus grande probabilité de reconnaissance est identifiée comme l'instruction vocale entrée, et les fonctions du dispositif ou des dispositifs et les réponses du système de dialogue vocal associées à cette instruction vocale sont lancées ou générées.

2. Procédé selon la revendication 1, **caractérisé par** les caractéristiques suivantes :
• les instructions vocales (le dialogue vocal) sont (est) formées (mis en oeuvre) sur la base d'au moins une structure syntaxique, au moins un vocabulaire d'instructions élémentaires et, si nécessaire, au moins un vocabulaire d'instructions supplémentaires spécifique au locuteur ;
• la (les) structure(s) syntaxique(s) et le(s) vocabulaire(s) d'instructions élémentaires sont prédéterminés dans une forme indépendante du locuteur et sont établis durant le fonctionnement en temps réel ;
• le(s) vocabulaire(s) d'instructions supplémentaires spécifique(s) au locuteur est (sont) entré(s) et/ou modifié(s) par le locuteur (respectif) par le fait que, durant des phases d'enseignement dans le cadre et/ou en dehors du fonctionnement en temps réel, le locuteur (respectif) enseigne à une unité de reconnaissance vocale supplémentaire fonctionnant à l'aide d'un procédé de reconnaissance dépendant du locuteur les caractéristiques spécifiques à la parole du locuteur (respectif) par entrée des instructions supplémentaires une ou plusieurs fois ;
• en fonctionnement en temps réel, le dialogue vocal et/ou la commande du dispositif (des dispositifs) sont/est mis(e) en oeuvre comme suit :
- des instructions vocales entrées par le locuteur (respectif) sont transmises à une unité de reconnaissance vocale de combinaisons de mots indépendante du locuteur, laquelle fonctionne sur la base de phonèmes et/ou de modèles de mots entiers, et à l'unité de reconnaissance vocale supplémentaire dépendant du locuteur, et y font l'objet (dans chaque cas) d'une extraction de caractéristiques, et
- sont examinées et classées dans l'unité de reconnaissance vocale de combinaisons de mots, sur la base des caractéristiques qui y ont été extraites, pour ce qui est de la présence d'instructions élémentaires issues du vocabulaire d'instructions élémentaires (respectif), conformément à la structure syntaxique prédéterminée (respective), et
- sont examinées et classées dans l'unité de reconnaissance vocale supplémentaire dépendant du locuteur, sur la base des caractéristiques qui y ont été extraites, pour ce qui est de la présence d'instructions supplémentaires issues du vocabulaire d'instructions supplémentaires (respectif) ;
- les instructions et structures syntaxiques des deux unités de reconnaissance vocale qui ont été classées comme ayant été reconnues avec une probabilité spécifique sont alors combinées pour former des instructions vocales hypothétiques, et celles-ci sont examinées et classées pour ce qui est de leur fiabilité et probabilité de reconnaissance, sur la base de la structure syntaxique prédéterminée ;
- les instructions vocales hypothétiques admissibles sont alors examinées sur la base de critères prédéterminés pour ce qui est de leur plausibilité et, parmi les instructions vocales hypothétiques reconnues comme étant plausibles, celle ayant la plus grande probabilité de reconnaissance est sélectionnée et identifiée comme l'instruction vocale entrée par le locuteur (respectif) ;
- la (les) fonction(s) du dispositif à commander associée(s) à l'instruction vocale identifiée est (sont) alors lancée(s), et/ou
- la (les) réponse(s) associée(s) à l'instruction vocale identifiée est (sont) alors générée(s) sur la base d'une structure de dialogue vocal prédéterminée, de façon à poursuivre le dialogue vocal.

3. Procédé selon l'une des revendications 1 ou 2, **caractérisé en ce que** les instructions vocales sont entrées par voie acoustique, de préférence par commande en parole libre.

4. Procédé selon l'une des revendications précédentes, **caractérisé en ce que** les instructions vocales entrées par voie acoustique sont fournies, avec une réduction du niveau de bruit, aux deux unités de reconnaissance vocale, par le fait que les signaux de bruit engendrés par le bruit ambiant en régime stationnaire ou quasi stationnaire et présents dans la voie de réception des signaux vocaux sont compensés, de préférence au moyen de procédés de filtrage numérique adaptatif, en amont des deux unités de reconnaissance vocale.

5. Procédé selon l'une des revendications précédentes, **caractérisé en ce que** les instructions vocales entrées par voie acoustique sont fournies, après compensation d'écho, aux deux unités de reconnaissance vocale, par le fait que les signaux d'une unité de sortie vocale ou musicale réinjectés dans la voie de réception des signaux vocaux sont compensés dans la voie de réception des signaux vocaux en amont des deux unités de reconnaissance vocale, en particulier en amont de l'unité de réduction du bruit, et de préférence au moyen de procédés de filtrage numérique adaptatif.

6. Procédé selon l'une des revendications précédentes, **caractérisé en ce que** les instructions vocales entrées sont combinées bloc par bloc suite à leur numérisation et, suite à leur pondération, sont converties au moyen d'une transformation spectrale, de préférence d'une transformation de Fourier rapide (FFT), dans le domaine fréquentiel, et sont ensuite combinées par formation d'amplitudes puis par filtrage MEL auditif pour former des vecteurs de voie, et **en ce qu'**elles font ensuite l'objet d'une segmentation.

7. Procédé selon la revendication 6, **caractérisé en ce que** la segmentation est subdivisée en une segmentation grossière et une segmentation fine.

8. Procédé selon l'une des revendications 6 ou 7, **caractérisé en ce que** l'extraction des caractéristiques dans l'unité de reconnaissance vocale de combinaisons de mots indépendante du locuteur est mise en oeuvre de telle sorte que
• les vecteurs de voie sont transformés par une transformation en cosinus discrète (DCT) en vecteurs cepstraux,
• l'énergie du signal associé est, de plus, calculée et normalisée,
• en vue de l'adaptation de l'unité de reconnaissance au locuteur respectif et/ou aux caractéristiques de transmission respectives de la voie de réception des signaux vocaux, la valeur moyenne des vecteurs cepstraux est calculée de façon continue et soustraite des vecteurs cepstraux,
• les vecteurs cepstraux desquels la valeur moyenne des vecteurs cepstraux a été soustraite et l'énergie calculée normalisée du signal sont combinés pour former des coefficients cepstraux sans valeur moyenne (vecteurs CMF).

9. Procédé selon l'une des revendications précédentes, **caractérisé en ce que** l'unité de reconnaissance de combinaisons de mots indépendante du locuteur fonctionne durant le processus de classement à l'aide de modèles de Markov cachés (HMM) à base de phonèmes et/ou de mots entiers.

10. Procédé selon la revendication 9, **caractérisé en ce que** le classement est mis en oeuvre à l'aide d'un algorithme de Viterbi, et **en ce que** l'algorithme de Viterbi est de préférence complété par une statistique de séquences de mots prédéterminée.

11. Procédé selon l'une des revendications précédentes, **caractérisé en ce que**, de plus, les mots de remplissage ou sons ou autres instructions incorrectes non inclus dans le vocabulaire élémentaire prédéterminé sont également reconnus comme tels durant le processus de classement, et sont classés en conséquence puis mis à part.

12. Procédé selon l'une des revendications précédentes, **caractérisé en ce que** l'unité de reconnaissance vocale de combinaisons de mots indépendante du locuteur et l'unité de reconnaissance vocale supplémentaire dépendant du locuteur font l'objet du même prétraitement du signal pour les instructions vocales entrées, ainsi que, de préférence, des procédés de réduction du bruit, de compensation d'écho et de segmentation.

13. Procédé selon l'une des revendications précédentes, **caractérisé en ce que** l'unité de reconnaissance vocale supplémentaire fonctionne comme une unité de reconnaissance vocale de mots individuels, de préférence à l'aide d'un procédé de normalisation temporelle dynamique.

14. Procédé selon l'une des revendications précédentes, **caractérisé en ce que** l'unité de reconnaissance vocale de combinaisons de mots indépendante du locuteur et l'unité de reconnaissance vocale dépendant du locuteur fonctionnent en combinaison dans un mode de combinaison de mots.

15. Procédé selon l'une des revendications précédentes, **caractérisé en ce que**, durant le fonctionnement en temps réel, il se produit une adaptation continue de la voie de réception des signaux vocaux à la caractéristique de transmission analogique, en particulier aux caractéristiques de l'acoustique ambiante et/ou du microphone et/ou de l'amplificateur et/ou du locuteur.

16. Procédé selon l'une des revendications 1 à 15, **caractérisé en ce que** les instructions élémentaires prédéterminées sont prédéterminées et stockées sous la forme d'un codage vocal et/ou les instructions supplémentaires entrées par le locuteur (respectif) dans les phases d'enseignement et/ou les instructions vocales entrées en fonctionnement en temps réel font l'objet d'un traitement supplémentaire sur la base d'un codage vocal, après avoir été entrées, et/ou sont stockées sous une forme non volatile, et **en ce que** les instructions vocales codées destinées à être fournies en sortie par voie acoustique font l'objet d'un décodage vocal avant d'être fournies en sortie.

17. Procédé selon l'une des revendications 1 à 15, **caractérisé en ce que** les instructions élémentaires prédéterminées et/ou les instructions supplémentaires et/ou les instructions vocales entrées en fonctionnement en temps réel sont stockées sous forme textuelle, et **en ce que** les instructions vocales destinées à être fournies en sortie par voie acoustique font l'objet d'une synthèse texte-parole avant d'être fournies en sortie.

18. Procédé selon l'une des revendications précédentes, **caractérisé en ce que** la structure syntaxique et les instructions indépendantes du locuteur sont produites et établies à l'avance dans le « mode d'édition du dialogue hors-ligne » dans le laboratoire, et sont transférées à l'unité de reconnaissance vocale de combinaisons de mots sous la forme de fichiers de données.

19. Procédé selon l'une des revendications précédentes, **caractérisé en ce que**
• il est possible de faire varier la position des mots dans les instructions vocales par permutation des mots individuels d'une instruction, et/ou
• il est possible d'utiliser des mots synonymes prédéterminés pour former des instructions vocales, et/ou
• il est possible d'offrir la même fonction par le biais d'instructions vocales présentant un nombre de mots différent.

20. Procédé selon l'une des revendications précédentes, **caractérisé en ce que** d'autres mots ou unités phonétiques sont ajoutés au vocabulaire admissible, ou des règles de localisation de mots sont utilisées dans le but de reconnaître puis de mettre à part des insertions ou d'autres instructions qui ne sont pas contenues dans le vocabulaire.

21. Procédé selon l'une des revendications précédentes, **caractérisé en ce que** la structure de dialogue présente les caractéristiques suivantes :
• hiérarchie plate ne comprenant qu'un petit nombre de niveaux hiérarchiques, de préférence un ou deux niveaux hiérarchiques,
• inclusion d'ellipses lors du déroulement du dialogue vocal,
• inclusion de menus d'aide ou d'information,
• inclusion d'interrogations émanant du système de dialogue vocal en cas de décisions incertaines par l'unité de reconnaissance,
• inclusion de sorties vocales dans le but d'améliorer la certitude de reconnaissance en encourageant des façons de parler spécifiques.

22. Procédé selon l'une des revendications précédentes, **caractérisé en ce que** la reconnaissance vocale ou le dialogue vocal destinés à commander une ou plusieurs fonctions de dispositif(s) sont activés en actionnant, de préférence une seule fois, une touche du type « appuyer pour parler » (PTT), et cette activation est de préférence confirmée par voie acoustique et/ou visuelle.

23. Procédé selon l'une des revendications 1 à 22, **caractérisé en ce qu'**il est mis automatiquement fin à l'activation si aucune entrée vocale n'est faite dans un intervalle de temps qui peut être prédéterminé ou qui est établi de façon adaptative en fonction de l'utilisateur respectif et/ou suite à une interrogation émanant du système de dialogue vocal, ou lorsque le dialogue sélectionné par l'utilisateur a été mené à bien.

24. Procédé selon l'une des revendications précédentes, **caractérisé en ce qu'**il peut être mis fin au dialogue vocal ou à l'entrée d'instructions vocales en entrant une instruction vocale de fin spécifique prédéterminée en des points définis dans le dialogue vocal, ou à tout moment en actionnant une touche, de préférence la touche du type « appuyer pour parler » ou une touche de fin.

25. Procédé selon l'une des revendications précédentes, **caractérisé en ce que** le système de dialogue vocal présente une ou plusieurs des caractéristiques de performance suivantes :
• les instructions vocales spécifiques (par exemple enseignées) émanant de différents locuteurs sont sauvegardées, si nécessaire, en vue d'une réutilisation ultérieure,
• les commandes vocales ou noms enseignés par le locuteur non seulement sont fournis au processus de reconnaissance durant la phase d'enseignement, mais leur profil temporel est également enregistré et ils sont soumis à une compression de données (codage vocal), et sont stockés sous une forme non volatile,
• les commandes vocales enseignées par le locuteur sont traitées durant la phase d'enseignement de telle manière que le bruit ambiant soit très largement compensé durant le processus d'enregistrement.

26. Procédé selon l'une des revendications précédentes, **caractérisé en ce que** l'achèvement d'un processus de reconnaissance est confirmé par voie acoustique au moyen d'un son de contrôle.

27. Procédé selon l'une des revendications précédentes, **caractérisé en ce que**, de préférence en cas de décisions concernant la sécurité et concernant le temps ou le coût, le résultat de la reconnaissance est répété par voie acoustique (sortie vocale), et le locuteur a la possibilité de supprimer ou de s'opposer à l'exécution de la fonction associée à l'instruction vocale au moyen d'une instruction vocale ou en actionnant un commutateur, de préférence la touche du type « appuyer pour parler » ou la touche de fin.

28. Procédé selon l'une des revendications précédentes, **caractérisé en ce que** le système de dialogue vocal est couplé à un support d'affichage visuel, de préférence un affichage LCD, un moniteur ou un affichage d'un dispositif piloté.

29. Procédé selon la revendication 28, **caractérisé en ce que** le support d'affichage visuel met en oeuvre des fonctions individuelles ou un certain nombre de fonctions parmi les fonctions suivantes :
• sortie des instructions vocales reconnues à des fins de contrôle,
• affichage des fonctions établies par le dispositif terminal en réaction à l'instruction vocale,
• affichage de diverses fonctions/options, qui sont ensuite établies, sélectionnées ou modifiées par l'instruction vocale.

30. Procédé selon l'une des revendications précédentes, **caractérisé en ce que** chaque locuteur peut créer ses propres listes de noms ou d'abréviations comprenant une ou plusieurs, ou la totalité, des caractéristiques suivantes :
• le nom enseigné par le locuteur pour l'unité de reconnaissance dépendant du locuteur représente une chaîne de caractères, une chaîne de lettres et/ou une instruction ou une séquence d'instructions qui a été entrée dans le mode de fonctionnement indépendant du locuteur,
• au lieu d'entrer une nouvelle fois la chaîne de caractères, la chaîne de lettres ou la séquence d'instructions, l'utilisateur peut entrer la désignation d'une liste et le nom sélectionné par lui ou, outre le nom, il peut entrer une instruction adéquate permettant de déduire la liste correcte,
• la liste peut être élargie par d'autres entrées, à tout moment, par commande vocale,
• la liste peut être effacée complètement ou sélectivement par commande vocale,
• la liste peut être contrôlée pour détecter une instruction vocale, les noms entrés par l'utilisateur et, si nécessaire, la chaîne de caractères, la chaîne de lettres ou les commandes associées étant fournis en sortie par voie acoustique,
• il peut être mis fin à tout moment à la sortie acoustique de la liste.

31. Procédé selon l'une des revendications précédentes, **caractérisé en ce qu'**une séquence de caractères (chaîne de caractères) peut être énoncée de manière cohésive d'un seul coup, ou bloc par bloc, l'entrée vocale ou le dialogue vocal présentant de préférence une ou plusieurs, voire la totalité, des caractéristiques suivantes :
• chaque pause d'entrée est suivie d'une confirmation, par répétition par la sortie vocale du dernier bloc d'entrée,
• après confirmation par une instruction vocale « erreur » ou assimilée, le dernier bloc d'entrée est effacé, et les blocs stockés restants sont fournis en sortie par voie acoustique,
• après confirmation par une instruction vocale « effacer » ou assimilée, tous les blocs de caractères entrés sont effacés,
• après confirmation par une instruction vocale « répéter » ou assimilée, les blocs précédemment stockés sont fournis en sortie par voie acoustique,
• après confirmation par une instruction vocale « fin » ou assimilée, il est mis entièrement fin à l'entrée de la chaîne de caractères,
• après confirmation, d'autres caractères ou blocs de caractères peuvent être entrés,
• après confirmation, il est mis fin à l'entrée de caractères par une instruction vocale adéquate « stop », « sauvegarder » ou assimilée,
• par l'entrée d'une instruction vocale telle que « sélectionner » ou assimilée, laquelle démarre une action/fonction, il est mis fin à l'entrée et l'action/la fonction associée à cette instruction vocale est lancée.

32. Procédé selon l'une des revendications précédentes, **caractérisé en ce qu'**une séquence de lettres (chaîne de lettres) est énoncée, laquelle est destinée à la sélection de fonctions complexes ou à l'entrée d'un grand nombre d'éléments d'information, la chaîne de lettres étant entrée de manière cohésive, ou bloc par bloc, et l'entrée vocale ou le dialogue vocal présentant de préférence une ou plusieurs, voire la totalité, des caractéristiques suivantes :
• chaque pause d'entrée est suivie d'une confirmation, par répétition par la sortie vocale du dernier bloc d'entrée,
• après confirmation par une instruction vocale « erreur » ou assimilée, le dernier bloc d'entrée est effacé, et les blocs stockés restants sont fournis en sortie par voie acoustique,
• après confirmation par une instruction vocale « effacer » ou assimilée, toutes les lettres entrées sont effacées, et une nouvelle entrée peut alors être faite,
• après confirmation par une instruction vocale « répéter » ou assimilée, les blocs précédemment stockés sont fournis en sortie par voie acoustique,
• après confirmation, d'autres lettres ou blocs de lettres peuvent être entrés,
• si nécessaire, la chaîne de lettres ou les blocs de lettres individuels sont mis en correspondance avec une liste de mots stockée et le(s) mot(s) correspondant le mieux en est (sont) extrait(s),
• après confirmation par une instruction vocale « fin » ou assimilée, il est mis entièrement fin à l'entrée de la chaîne de lettres,
• après confirmation, il est mis fin à l'entrée de lettres par une instruction vocale « stop », « sauvegarder » ou assimilée,
• par l'entrée d'une instruction vocale telle que « sélectionner » ou assimilée, laquelle démarre une action/fonction, il est mis fin à l'entrée et l'action/la fonction associée à cette instruction vocale est lancée.

33. Procédé selon l'une des revendications 31 ou 32, **caractérisé en ce que** lors de la sortie des caractères énoncés précédents qui suit l'instruction vocale « erreur » ou assimilée ou l'instruction vocale « répéter » ou assimilée, on utilise la même formation de blocs que lors de l'entrée.

34. Procédé selon l'une des revendications précédentes, **caractérisé en ce que** le volume de sortie de la sortie vocale et du son contrôle est adaptée au bruit ambiant, l'intensité et la caractéristique du bruit ambiant étant détectées durant les pauses vocales.

35. Procédé selon l'une des revendications précédentes, **caractérisé en ce que** l'accès au système de dialogue vocal ou l'accès à des données/instructions spécifiques à l'utilisateur se font uniquement par entrée de mots d'instruction spécifiques ou par entrée de mots d'instruction spécifiques émanant d'un locuteur autorisé dont les caractéristiques vocales sont connues du système de dialogue vocal, et sont vérifiées par lui.

36. Procédé selon l'une des revendications précédentes, **caractérisé en ce qu'**il est possible de mettre fin prématurément aux sorties vocales plus longues (par exemple les menus d'information) à l'aide d'instructions de fin énoncées ou manuelles.

37. Procédé selon l'une des revendications précédentes, **caractérisé en ce que** le système de dialogue vocal complète ou remplace la commande manuelle des fonctions ci-dessus (par exemple par des commutateurs, des touches, des boutons rotatifs) dans l'une des formes suivantes :
• le processus à instructions vocales existe en plus de la commande manuelle, de sorte que la commande puisse, à tout moment, être mise en oeuvre ou se poursuivre manuellement ;
• un certain nombre de caractéristiques de performance spécifiques ne peuvent être activées que par entrée vocale, tandis que les autres fonctions de dispositif(s) et de commande peuvent toujours être commandées tant manuellement qu'à la voix ;
• le nombre d'éléments de commande manuelle est considérablement réduit avec des touches ou boutons rotatifs individuels assurant des fonctions multiples ; la voix est utilisée pour affecter une fonction spécifique à des éléments de commande manuelle ; seules les fonctions de commande principales peuvent encore être actionnées manuellement ; les fonctions de commande se basent sur le processus à instructions vocales.

38. Procédé selon l'une des revendications précédentes, **caractérisé en ce qu'**un grand nombre de dispositifs et de fonctions de dispositifs différents peuvent être adressés et modifiés par un seul mot individuel ou une instruction à mots multiples, si bien qu'il n'y a pas besoin de procédure à étapes multiples, ou qu'une telle procédure n'est nécessaire que dans une faible mesure.

39. Procédé selon l'une des revendications précédentes, **caractérisé en ce que** le système de dialogue vocal est utilisé dans des véhicules automobiles, pour chacune ou plusieurs des fonctions énumérées dans le texte qui suit :
• commande de plusieurs dispositifs, ou de dispositifs séparés comme un téléphone de voiture, un autoradio (éventuellement à cassette, changeur de CD, système audio), un système de navigation, le téléappel, un moniteur embarqué, un système de climatisation, le chauffage, une ordinateur de voyage, l'éclairage, un toit ouvrant, un lève-vitre, une unité de réglage de siège ;
• la vérification d'informations de paramètres, comme la pression et la température d'huile, la température de l'eau de refroidissement, la consommation, la pression des pneus ;
• des informations concernant des actions nécessaires, par exemple dans le cas d'une température d'eau de refroidissement trop élevée, une pression des pneus trop basse ;
• avertir le conducteur de défauts dans le véhicule.

40. Procédé selon la revendication 39, **caractérisé en ce que** la sélection par commande vocale d'un nouvel émetteur pour l'autoradio se fait à l'aide d'une des séquences suivantes :
• instruction pour une recherche ascendante ou descendante ;
• entrée vocale de la fréquence de l'émetteur, de préférence sous forme de langage normal, de préférence avec une indication de la fréquence ;
• entrée vocale du nom normal de l'émetteur.

41. Procédé selon la revendication 39, **caractérisé en ce que**, pour le système de climatisation, la température souhaitée peut être définie de manière relative et/ou de préférence de manière absolue par entrée vocale et, de préférence et en outre, une température minimale, maximale ou moyenne ou une température normale peut faire l'objet d'une instruction.

42. Procédé selon la revendication 39, **caractérisé en ce qu'**un lieu de destination (nom de lieu, nom de route) est notifié au système de navigation par entrée de chaînes de lettres dans le « mode d'épellation », le début du nom de préférence également étant suffisant comme entrée, et le système de navigation offrant, si nécessaire, un certain nombre de candidats en vue d'une sélection.

43. Procédé selon l'une des revendications 39 à 42, **caractérisé en ce qu'**une ou plusieurs des listes de noms spécifiques à l'utilisateur suivantes sont créées :
• liste pour stocker des numéros de téléphone sous des noms/abréviations pouvant être prédéterminés,
• liste pour stocker des destinations pour le système de navigation sous des noms/abréviations pouvant être prédéterminés,
• liste pour stocker des noms de fonctions pour des instructions ou des séquences d'instructions,
• liste pour stocker des fréquences d'émetteurs pour l'autoradio sous des noms d'émetteurs ou des abréviations pouvant être prédéterminés.

44. Procédé selon l'une des revendications 39 à 43, **caractérisé en ce que** le volume de sortie de la sortie vocale et du son de contrôle ou des sons de contrôle et, éventuellement, également le volume de la radio, sont définis ou accordés de manière adaptative en tenant compte d'un ou de plusieurs paramètres parmi les paramètres suivants :
• vitesse du véhicule
• position de réglage du ventilateur
• vitesse du moteur
• degré d'ouverture des fenêtres et du toit ouvrant
• type de véhicule
• importance de la sortie vocale dans la situation de dialogue respective.

45. Procédé selon l'une des revendications 22 à 44, **caractérisé en ce que** la touche de type « appuyer pour parler »
• soit exécute ou comporte des fonctions multiples, par exemple (« raccrocher le combiné », « décrocher le combiné ») lorsqu'on téléphone ou lorsqu'on recommence le système de dialogue vocal ou met fin à un processus de numérotation téléphonique,
• soit est complétée par un commutateur supplémentaire ou une position de commutation supplémentaire qui, par exemple, permet de recommencer une fonction ou d'y mettre fin.

46. Appareil pour mettre en oeuvre le procédé selon l'une des revendications précédentes, dans lequel une unité d'entrée/sortie vocale est branchée, via une unité de prétraitement des signaux vocaux, à une unité de reconnaissance vocale, laquelle est à son tour branchée à une commande de séquences, de dialogue et d'interface, **caractérisé en ce que** l'unité de reconnaissance vocale comprend une unité de reconnaissance de combinaisons de mots indépendante du locuteur et une unité de reconnaissance vocale supplémentaire dépendant du locuteur, les côtés sortie de ces deux unités étant branchés à une unité de post-traitement syntaxo-grammatical ou sémantique, laquelle est branchée à la commande de séquences, de dialogue et d'interface.

47. Appareil selon la revendication 46, **caractérisé en ce que** l'unité de prétraitement des signaux vocaux contient un appareil de réduction du bruit et/ou un appareil de compensation d'écho et/ou un appareil de segmentation.

48. Appareil selon l'une des revendications 46 ou 47, **caractérisé en ce que** l'unité d'entrée/sortie vocale contient un codeur vocal, un décodeur vocal et une mémoire vocale.

49. Appareil selon l'une des revendications 46 à 48, **caractérisé en ce que** la commande de séquences, de dialogue et d'interface, l'entrée/sortie vocale et le prétraitement des signaux vocaux, la reconnaissance vocale, le post-traitement syntaxo-grammatical et sémantique sont mis en oeuvre au moyen de microprocesseurs et de processeurs de signaux, de mémoires et de modules d'interface, mais préférablement avec un seul processeur de signaux ou microprocesseur numérique ainsi qu'avec la mémoire de données et de programmes externe nécessaire, les interfaces et les modules de gestion associés, un générateur d'horloge, une logique de commande et les microphones et hauts-parleurs nécessaires aux entrées/sorties vocales, conjointement avec des transducteurs et amplificateurs associés et, si nécessaire, une touche du type « appuyer pour parler » (PTT) et une touche de fin.

50. Appareil selon la revendication 49, **caractérisé en ce que**, via une ou plusieurs interfaces,
• des données et/ou paramètres peuvent être chargés ou rechargés afin, par exemple, de mettre en oeuvre des changements de procédés ou un système de dialogue vocal pour un autre langage,
• la structure syntaxique, la structure de dialogue, la commande de séquences et la sortie vocale, etc. qui sont définies ou modifiées sur un ordinateur distinct, sont transférées vers le système de dialogue vocal (« éditeur de dialogue hors ligne »),
• des informations d'état ou de diagnostic peuvent être demandées et extraites du système de dialogue vocal.

51. Appareil selon la revendication 49, **caractérisé en ce que** cet appareil est relié par un système de bus ou un réseau en anneau à un certain nombre des dispositifs à actionner, et **en ce que** des données de commande et/ou des signaux audio et/ou des messages d'état relatifs au système de dialogue vocal et/ou aux dispositifs à commander sont transmis via ce bus ou ce réseau.

52. Appareil selon l'une des revendications 46 à 51 destiné à être utilisé dans des véhicules, **caractérisé en ce que** les dispositifs individuels à actionner ne contiennent pas chacun leur propre système de dialogue vocal, mais sont commandés à partir d'un seul système de dialogue vocal commun.

53. Appareil selon l'une des revendications 46 à 52, **caractérisé en ce qu'**il existe une ou plusieurs interfaces pour des composants de véhicule ou des ordinateurs de véhicule, via lesquelles des données permanentes ou actualisées du véhicule, comme la vitesse, sont notifiées au système de dialogue vocal.

54. Appareil selon l'une des revendications 46 à 53, **caractérisé en ce que** cet appareil exécute d'autres fonctions liées, par exemple, à la radio, au téléphone ou assimilés, durant les temps d'attente pendant lesquels il n'y a pas d'entrée ou de sortie vocale.

55. Appareil selon l'une des revendications 46 à 54, **caractérisé en ce qu'**un système de dialogue multilingue indépendant du locuteur est fourni au moyen d'une mémoire élargie, avec la possibilité de commuter entre les systèmes de dialogue de différentes langues.

56. Appareil selon l'une des revendications 46 à 55, **caractérisé en ce qu'**un affichage visuel est couplé au système de dialogue vocal via une interface spéciale ou via la connexion par bus.

57. Appareil selon l'une des revendications 46 à 56, **caractérisé en ce que** le système de dialogue vocal tout entier est couplé via une interface PCMCIA au dispositif appelé à être actionné ou commandé par la voix, et/ou à un ordinateur hôte ou d'application.

58. Appareil selon la revendication 51 ou 57, **caractérisé en ce que** ce bus ou ce réseau est un bus de données optique, et des signaux de commande et audio et/ou des messages d'état pour le système de dialogue vocal et les dispositifs à commander sont transmis via ce bus de données.
